# EUROPEAN PATENT APPLICATION

(11) **EP 4 823 004 A1**
(43) Date of publication of application: **14.10.2026**
(21) Application number: 24901088.5
(22) Date of filing: 05.12.2024
(51) Int. Cl.: H04B 7/06, H04B 7/08, H04W 24/08, H04W 24/10, H04B 17/318, H04B 17/336, H04L 5/00, H04W 72/23, H04W 72/231

(54) **METHOD AND APPARATUS FOR BEAM QUALITY REPORTING IN COMMUNICATION SYSTEM**

(30) Priority: 05.12.2023 KR 20230174926; 27.02.2024 KR 20240028251; 05.06.2024 KR 20240073972; 29.08.2024 KR 20240117167; 03.12.2024 KR 20240177593
(71) Applicant: Electronics and Telecommunications Research Institute, Daejeon 34129 (KR)
(72) Inventor: MOON, Sung Hyun, Daejeon 34129 (KR); KIM, Cheulsoon, Daejeon 34129 (KR); LEE, Junghoon, Daejeon 34129 (KR)
(74) Representative: Betten & Resch
(86) International application number: PCT/KR2024/019818
(87) International publication number: WO 2025/121902

(57) **Abstract**

Disclosed are a method and an apparatus for beam quality reporting in a communication system. The method for a terminal comprises the steps of: receiving configuration information of a periodic downlink resource from a base station; performing a beam measurement operation for a first signal received in the periodic downlink resource; on the basis of the result of the beam measurement operation, determining that an event has occurred; if the event has occurred, generating beam reporting information; and performing a reporting operation on the beam reporting information on the basis of the event.

## Description

### [Technical Field]

The present disclosure relates to a beam quality reporting technique, and more particularly, to a technique for terminal-initiated beam reporting.

### [Background Art]

The importance of developing next-generation communication systems (e.g., New Radio (NR) communication system, Sixth Generation (6G) communication system) as infrastructure for the expansion of various future convergence services is increasing. The next-generation communication systems can support not only conventional mobile communication frequency bands but also millimeter-wave bands, terahertz bands, and upper-mid bands. The next-generation communication systems can support a wider range of performance metrics and scenarios compared to conventional communication systems (e.g., Long Term Evolution (LTE) communication systems). In high-frequency band communications, technologies for reliably managing beams of a terminal are required to support beamforming-based transmission. Additionally, continuous research is needed to optimize the overhead associated with beam management and the delay time of beam switching.

In a communication system, beam reporting operations may be required. Conventional beam reporting operations may be triggered by a base station. In this case, the signaling overhead for beam reporting operations may be large, and a delay time required for beam switching may be long. As a result, resource efficiency and/or link reliability in the communication system may be low. Therefore, an improved beam reporting operation is required to address the above-described issues.

### [Disclosure]

### [Technical Problem]

The present disclosure is directed to providing a method and an apparatus for terminal-initiated beam reporting in a communication system.

### [Technical Solution]

A method of a terminal, according to exemplary embodiments of the present disclosure for achieving the above-described objective, may comprise: receiving configuration information of a periodic downlink resource from a base station; performing a beam measurement operation for a first signal received in the periodic downlink resource; determining that an event occurs based on a result of the beam measurement operation; in response to the event occurring, generating beam report information; and performing a reporting operation for the beam report information based on the event, wherein the beam measurement operation includes deriving a beam quality value of the first signal N times, and the beam report information includes at least an index of the periodic downlink resource.

The determining that the event occurs may comprise: comparing the beam quality values derived N times with a reference value; and determining that the event occurs based on a result of the comparison between the beam quality values derived N times and the reference value.

The periodic downlink resource may correspond to a first transmission configuration indication (TCI) belonging to a TCI list configured in the terminal, and the first TCI may be an activated TCI.

The beam quality value may be a reference signal received power (RSRP), and the reference value may be a beam quality value of a periodic downlink resource corresponding to a current beam of the terminal.

The reference value may not change in an interval during which the beam measurement operation is performed.

The first signal may be received within a preconfigured time interval, and the preconfigured time interval may include one or more periods for the periodic downlink resource.

The reporting operation is may be operation to notify the base station that the terminal transmits a scheduling request (SR) in a first uplink resource and transmits a physical uplink shared channel (PUSCH) in a second uplink resource.

The PUSCH may include the beam report information.

The second uplink resource may be associated with the first uplink resource, and a period of the second uplink resource may match a period of the first uplink resource.

A method of a base station, according to exemplary embodiments of the present disclosure for achieving the above-described objective, may comprise: transmitting configuration information of a periodic downlink resources to a terminal; transmitting a first signal for a beam measurement operation of the terminal to the terminal in the periodic downlink resources; and in response to an event occurring based on a result of the beam measurement operation, receiving a report on beam report information from the terminal, wherein the beam measurement operation includes deriving a beam quality value of the first signal N times, and the beam report information includes at least an index of the periodic downlink resource.

The periodic downlink resource may correspond to a first transmission configuration indication (TCI) belonging to a TCI list configured in the terminal, and the first TCI may be an activated TCI.

The first signal may be transmitted within a preconfigured time interval, and the preconfigured time interval may include one or more periods for the periodic downlink resource.

The report may include information indicating to the base station that the terminal transmits a scheduling request (SR) in a first uplink resource and transmits a physical uplink shared channel (PUSCH) in a second uplink resource.

The PUSCH may include the beam report information.

The second uplink resource may be associated with the first uplink resource, and a period of the second uplink resource may match a period of the first uplink resource.

A terminal, according to exemplary embodiments of the present disclosure for achieving the above-described objective, may comprise at least one processor, wherein the at least one processor may cause the terminal to perform: receiving configuration information of a periodic downlink resource from a base station; performing a beam measurement operation for a first signal received in the periodic downlink resource; determining that an event occurs based on a result of the beam measurement operation; in response to the event occurring, generating beam report information; and performing a reporting operation for the beam report information based on the event, wherein the beam measurement operation includes deriving a beam quality value of the first signal N times, and the beam report information includes at least an index of the periodic downlink resource.

In the determining that the event occurs, the at least one processor may cause the terminal to perform: comparing the beam quality values derived N times with a reference value; and determining that the event occurs based on a result of the comparison between the beam quality values derived N times and the reference value.

The periodic downlink resource may correspond to a first transmission configuration indication (TCI) belonging to a TCI list configured in the terminal, and the first TCI may be an activated TCI.

The reporting operation may be an operation to notify the base station that the terminal transmits a scheduling request (SR) in a first uplink resource and transmits a physical uplink shared channel (PUSCH) in a second uplink resource.

The PUSCH may include the beam report information, the second uplink resource may be associated with the first uplink resource, and a period of the second uplink resource may match a period of the first uplink resource.

### [Advantageous Effects]

According to the present disclosure, a terminal can perform a beam measurement operation on a signal received from a base station and transmit beam report information to the base station based on a result of the beam measurement operation. The terminal can transmit the beam report information to the base station when an event occurs, even without triggering by the base station. Since the transmission operation of the beam report information is performed without triggering by the base station, a signaling overhead for the beam reporting operation can be reduced, and a delay time required for beam switching can be decreased. Additionally, resource efficiency and/or link reliability in the communication system can be improved.

### [Description of Drawings]

FIG. 1 is a conceptual diagram illustrating exemplary embodiments of a communication system.
FIG. 2 is a block diagram illustrating exemplary embodiments of an apparatus.
FIG. 3 is a conceptual diagram illustrating a first exemplary embodiment of a TCI indication method using DCI.
FIG. 4 is a conceptual diagram illustrating a first exemplary embodiment of a method for configuring a candidate beam set for a downlink TCI.
FIG. 5 is a conceptual diagram illustrating a first exemplary embodiment of a method for configuring a candidate beam set for an uplink TCI.
FIG. 6 is a conceptual diagram illustrating a second exemplary embodiment of a method for configuring a candidate beam set for a downlink TCI.
FIG. 7 is a conceptual diagram illustrating a second exemplary embodiment of a method for configuring a candidate beam set for an uplink TCI.
FIG. 8 is a conceptual diagram illustrating a first exemplary embodiment of the beam reporting method according to (Method 300).
FIG. 9 a conceptual diagram illustrating a second exemplary embodiment of the beam reporting method according to (Method 300).
FIG. 10 is a conceptual diagram illustrating a first exemplary embodiment of a beam reporting method based on repeated PUCCH resources.
FIG. 11 is a conceptual diagram illustrating a second exemplary embodiment of a beam reporting method based on repeated PUCCH resources.
FIG. 12 is a conceptual diagram illustrating a third exemplary embodiment of a beam reporting method based on repeated PUCCH resources.
FIG. 13 is a conceptual diagram illustrating a first exemplary embodiment of a beam switching method without intervention by a base station.
FIG. 14 is a conceptual diagram illustrating a first exemplary embodiment of a beam switching method with intervention by a base station.

### [Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, 'configuration of an operation (e.g., transmission operation)' may mean 'signaling of configuration information (e.g., information element(s), parameter(s)) for the operation' and/or 'signaling of information indicating performing of the operation'. In other words, 'an operation (e.g., transmission operation) being configured in a communication node' may mean that the communication node receives 'configuration information (e.g., information element, parameter) for the operation' and/or 'information indicating to perform the operation'. 'An information element (e.g., parameter) being configured in a communication node' may mean that the information element is signaled to the communication node (e.g., the communication node receives the information element)'. Signaling may be at least one of system information (SI) signaling (e.g., transmission of a system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

In the present disclosure, a 'time' may mean a time point, and 'time' and 'time point' may be used with the same meaning. A reception time of a signal or channel may mean a reception start time or a reception end time. A transmission time of a signal or channel may mean a transmission start time or a transmission end time.

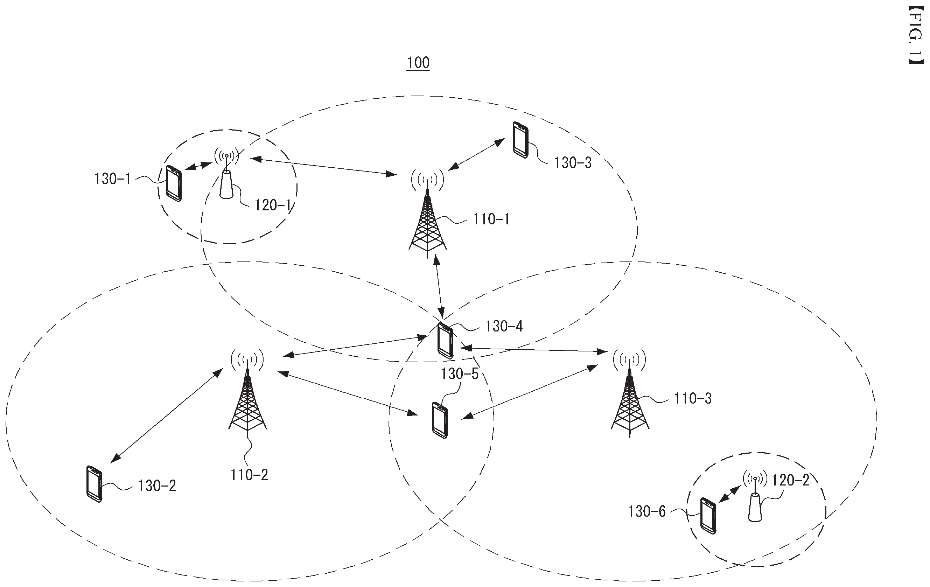

FIG. 1 is a conceptual diagram illustrating exemplary embodiments of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may mean an apparatus or a device. Exemplary embodiments may be performed by an apparatus or device. A structure of the apparatus (or, device) may be as follows.

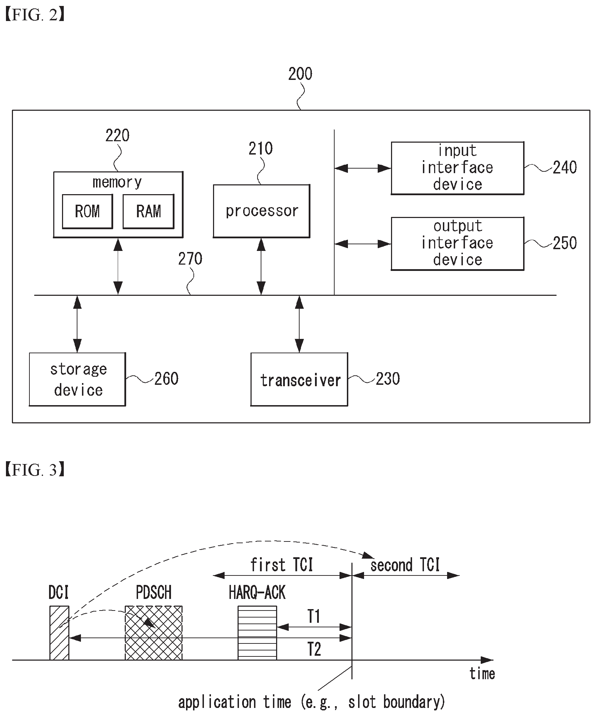

FIG. 2 is a block diagram illustrating exemplary embodiments of an apparatus.

Referring to FIG. 2, an apparatus 200 may comprise at least one processor 210, a memory 220, and a transceiver 230 connected to the network for performing communications. Also, the apparatus 200 may further comprise an input interface device 240, an output interface device 250, a storage device 260, and the like. The respective components included in the apparatus 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

The present disclosure may relate to a technique for transmitting and receiving signals in a communication system. More specifically, the present disclosure relates to a method and apparatus for performing multi-transmission point based signal transmission and beam management in a communication system. The following exemplary embodiments may be applied to an NR communication system and, in addition to the NR communication system, may also be applied to other communication systems (e.g., LTE communication system, fifth generation (5G) communication system, sixth generation (6G) communication system, etc.).

A numerology applied to physical signals and channels in the communication system (e.g., NR communication system or 6G communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g., extended CP) may be additionally supported for a specific subcarrier spacing (e.g., 60 kHz).

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 6.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. The length of an actual time resource used for transmission, measurement, scheduling, resource configuration, etc. may not match the length of a slot. A mini-slot may include consecutive symbol(s), and the length of a mini-slot may be shorter than the length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., the length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE may include one or more RBs in the frequency domain.

In the communication system (e.g., NR communication system), the above-described unit time resource (hereinafter, 'slot') may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the periodic operation configured by the base station may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g., overridden flexible symbol).

In the present disclosure, an SSB may refer to a signal set including synchronization signals and/or a broadcast channel. The synchronization signals may include a PSS, SSS, etc., and the broadcast channel may include a physical broadcast channel (PBCH). The SSB may further include a reference signal. Reference signals (e.g., reference signal included in the SSB) include a demodulation reference signal (DM-RS) for decoding of the PBCH, CSI-RS, tracking reference signal (TRS), positioning reference signal (PRS), phase tracking reference signal (PT-RS), and the like. In the NR communication system, the SSB may refer to a synchronization signal/physical broadcast channel (SS/PBCH) block. SSBs may be transmitted periodically, and one or more SSB(s) may be transmitted repeatedly in one cycle.

A format of the unit time resource (hereinafter, 'slot format') may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. One numerology may be used for transmission of signals (e.g., transmission of control channel or data channel) in one bandwidth part. In the present disclosure, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology and/or an RB set applied to the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, 'a certain frequency band (e.g., carrier, bandwidth part, RB set, listen before talk (LBT) subband, guard band, etc.) is activated' may mean that the base station or terminal is in a state where signals can be transmitted and received using the frequency band. Further, 'a certain frequency band is activated' may mean that a radio frequency (RF) filter (e.g., band-pass filter) of a transceiver is in a state of operating including the frequency band.

In exemplary embodiments, an RB may mean a common RB (CRB). Alternatively, an RB may mean a PRB or a virtual RB (VRB). In the communication system (e.g., NR communication system), a CRB may refer to an RB constituting a set of consecutive RBs (e.g., common RB grid) based on a reference frequency (e.g., point A). Carriers, bandwidth parts, and the like may be arranged on the common RB grid. In other words, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A PDCCH may be used to transmit a DCI or DCI format to the terminal. A minimum resource unit constituting a PDCCH may be a resource element group (REG). An REG may be composed of one PRB in the frequency domain and one OFDM symbol in the time domain. A demodulation reference signal (DMRS) for demodulating a PDCCH may be mapped to some REs among REs constituting the REG, and control information (e.g., modulated DCI) may be mapped to the remaining REs. One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of 6 REGs.

A control resource set (CORESET) may be a resource region in which the terminal performs a blind decoding on PDCCHs. The CORESET may be composed of a plurality of REGs. The CORESET may consist of one or more RBs in the frequency domain and one or more symbols (e.g., OFDM symbols) in the time domain. The symbols constituting one CORESET may be consecutive in the time domain. The RBs constituting one CORESET may be consecutive or non-consecutive in the frequency domain. One DCI (e.g., one DCI formation, one PDCCH) may be transmitted within one CORESET. A plurality of CORESETs may be configured with respect to a cell and a terminal, and time/frequency resource regions to which the plurality of CORESETs are mapped may or may not overlap with each other.

A CORESET may be configured in the terminal during an initial access procedure. For example, a CORESET may be configured in the terminal by an initial access signal (e.g., a PBCH or system information transmitted on the PBCH). An identifier (ID) of the CORESET configured by the initial access signal may be 0. The CORESET configured by the initial access signal may be referred to as a CORESET 0. A terminal operating in the RRC idle state may perform a monitoring operation in the CORESET 0 in order to receive an initial PDCCH in the initial access procedure. Not only terminals operating in the RRC idle state but also terminals operating in the RRC connected state may perform monitoring operations in the CORESET 0. The CORESET may be configured in the terminal by other system information (e.g., system information block type 1 (SIB1)) other than the system information transmitted through the initial access signal (e.g., PBCH). For example, for reception of a random access response (or Msg2), the terminal may receive the SIB1 including the configuration information of the CORESET. The CORESET may be configured in the terminal by terminal-specific higher layer signaling (e.g., RRC signaling).

A search space may be a set of candidate resource regions in which PDCCHs can be transmitted. The terminal may perform a blind decoding on each of PDCCH candidates within a predefined search space or a search space configured by the base station. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH.

One or more search space(s) may constitute a search space set. The search space may be defined/configured for each CCE aggregation level, and the search space set may mean a search space for each CCE aggregation level or a sum of search spaces for all CCE aggregation levels. For each CCE aggregation level, a PDCCH candidate may consist of CCE(s) selected by a predefined hash function within the CORESET or search space occasion. In exemplary embodiments, 'search space set' may refer to 'search space'.

A search space set may be logically associated (e.g., combined) with one CORESET. One CORESET may be logically associated with one or more search space sets. A common search space set configured by the PBCH may be used to monitor a DCI that schedules a PDSCH for carrying the SIB1. An ID of the common search space set configured by the PBCH may be set to 0. In other words, the common search space set configured by the PBCH may be defined as a Type 0 PDCCH common search space set or search space set #0. The search space set #0 may be logically associated with the CORESET 0.

The search space sets may be classified into common search space sets and terminal-specific search space sets (i.e., UE-specific search space sets) depending on their purposes or operations of the terminal. A common DCI or a terminal-specific DCI (e.g., UE-specific DCI) may be transmitted in a common search space set, and a terminal-specific DCI may be transmitted in a terminal-specific search space set (e.g., UE-specific search space set). For example, the common DCI may include resource allocation information of a PDSCH including system information, paging messages, etc., power control command, slot format indicator (SFI), and/or preemption indicator. The terminal-specific DCI may include resource allocation information of a PDSCH and/or resource allocation information of a PUSCH. A plurality of DCI formats may be defined depending on the purposes, and the plurality of DCI formats may be distinguished by the terminal by a DCI payload, DCI field, DCI size, and/or radio network temporary identifier (RNTI).

In the present disclosure, a common search space may be referred to as a CSS, and a common search space set may be referred to as a CSS set. A terminal-specific search space may be referred to as a UE-specific search space (USS), and a terminal-specific search space set may be referred to as a USS set.

The terminal may assume that a PDCCH DM-RS has a quasi-co-location (QCL) relationship with a certain signal (e.g., SSB, CSI-RS, PDSCH DM-RS, PDCCH DM-RS, etc.). The PDCCH DM-RS may refer to a DM-RS used for modulation and/or demodulation of a PDCCH. The PDSCH DM-RS may refer to a DM-RS used for modulation and/or demodulation of a PDSCH. Since the PDCCH has the same antenna port as the PDCCH DM-RS, the PDCCH and the PDCCH DM-RS may have a QCL relationship. Through the QCL assumption, the terminal may obtain information on large-scale propagation characteristics of a wireless channel experienced by the PDCCH and the PDCCH DM-RS and may utilize the large-scale propagation characteristics of the wireless channel for channel estimation and reception beamforming. QCL parameters may include at least one of delay spread, Doppler spread, Doppler shift, average gain, average delay, or spatial reception (Rx) parameters. The spatial reception parameters may correspond to at least one of a reception beam, a reception channel spatial correlation, or a pair of transmission and reception beams. The spatial reception parameters may be referred to as 'spatial QCL'. The PDCCH may be used in a sense that includes the PDCCH DM-RS. The statement that a PDCCH has a QCL relationship with a certain signal may include a meaning that a DM-RS of the PDCCH has a QCL relationship with the certain signal. A signal having a QCL relationship with a PDCCH or a resource of the signal may be referred to as a QCL source, a QCL source signal, or a QCL source resource.

PDCCHs transmitted in the same CORESET (e.g., search space sets, PDCCH monitoring occasions, etc. corresponding to the same CORESET) may have the same QCL relationship. In other words, a unit for which the terminal assumes the same QCL may be a CORESET, and QCL assumption may be independent for each CORESET. In exemplary embodiments, a QCL and a QCL source of a certain CORESET may refer to a QCL and a QCL source of a PDCCH received through the corresponding CORESET, respectively. Exceptionally, different QCL assumptions may be applied to search space sets corresponding to a single CORESET. For example, a search space set (e.g., Type 1 CSS set) for monitoring a random access (RA)-RNTI and a search space set other than the aforementioned search space set may have different QCL relationships.

A QCL relationship or QCL assumption (e.g., QCL source, QCL type, etc.) of a CORESET may be determined by a predefined method. For example, the terminal may assume that a PDCCH DM-RS received through a certain CORESET or a certain search space set has a QCL relationship with an SSB and/or CSI-RS selected in an initial access or random access procedure for a predefined QCL type. The QCL type may refer to a set of one or more QCL parameters. A QCL relationship or QCL assumption (e.g., QCL source, QCL type, etc.) of a CORESET may be signaled by base station to the terminal (e.g., through RRC signaling, MAC control element (CE) signaling, DCI signaling, or a combination thereof). In other words, the base station may configure a transmission configuration indication (TCI) state for the CORESET in the terminal. Generally, a TCI state may include at least one of an ID of a signal (e.g., a QCL source or QCL source resource of a PDCCH DM-RS) having a QCL relationship with a DM-RS of a physical channel (e.g., the PDCCH DM-RS) to which a TCI is applied or a QCL type for the signal. For example, the base station may configure one or more TCI state candidates for each CORESET through RRC signaling and may indicate (e.g., configure) one of the TCI state candidates to be used for CORESET monitoring of the terminal through MAC signaling (or DCI signaling). If only one TCI state candidate is configured through RRC signaling, the MAC signaling procedure (or DCI signaling procedure) may be omitted. The terminal may perform PDCCH monitoring and reception operations for the corresponding CORESET based on the TCI state configuration information received from the base station.

In the present disclosure, a TCI state may be referred to as a TCI for convenience. While a TCI generally refers to a broad concept that includes a beam or signaling information related to the beam, in the present disclosure, it may be used in a sense corresponding to a beam. A downlink TCI or a TCI for receiving a downlink signal may correspond to a reception beam, whereas an uplink TCI or a TCI for transmitting an uplink signal may correspond to a transmission beam. The transmission beam may refer to spatial relation information, a transmission spatial filter, or the like.

In a communication system, beam operations in a high-frequency band and a low-frequency band may differ. Since a path loss of signals due to a channel is relatively small in a low-frequency band (e.g., a band below 6 GHz), the signals may be transmitted and received using a beam having a wide beamwidth. Transmission of a control channel may cover the entire coverage of a cell (or sector) even with a single beam. In a high-frequency band where a path loss of signals is large (e.g., a band above 6 GHz), beamforming using a large-scale antenna may be used to extend a reach of signals. The beamforming may be applied not only to a data channel but also to a common signal and a control channel. A communication node (e.g., a base station) may form a beam having a narrow beamwidth through multiple antennas and may transmit and receive a signal multiple times using a plurality of beams having directivity in different directions in order to cover the entire spatial area of a cell (or sector). The operation of repeatedly transmitting a signal in a plurality of time resources using a plurality of beams may be referred to as beam sweeping. A system that transmits a signal using a plurality of beams having a narrow beamwidth may be referred to as a multi-beam system.

The multi-beam system may operate based on beam management. A terminal may measure a beam quality for a received signal (e.g., SSB, CSI-RS, etc.) and may report a measurement result of the beam quality to a base station. For example, the terminal may calculate a beam quality measurement value such as reference signal received power (RSRP) (e.g., L1-RSRP) and signal-to-interference-plus-noise ratio (SINR) for each beam (e.g., each signal or each resource) and may report optimal beam(s) and/or measurement value(s) corresponding to the optimal beam(s) to the base station. The terminal may report beam index(es) corresponding to the measurement value(s) to the base station. The beam index may indicate information related to an SSB resource, a CSI-RS resource, etc. (e.g., SSB resource indicator, CSI-RS resource indicator, etc.). Information on the beam index(es) may be included in CSI, and the CSI may be transmitted through an uplink channel such as PUCCH or PUSCH. The base station may determine a transmission beam for the terminal based on the beam index(es) and/or beam quality measurement information (e.g., beam quality measurement value(s)) reported by the terminal. The base station may configure a TCI state for reception of physical signals and channels (e.g., PDCCH, PDSCH, CSI-RS, PUCCH, a PUSCH, SRS, PRACH, etc.) of the terminal to the terminal based on the beam index(es) and/or beam quality measurement information (e.g., beam quality measurement value(s)) reported by the terminal.

Multi-beams may be formed by multiple TRPs and/or panels. In the present disclosure, a TRP and a panel may be collectively referred to as 'TRP'. The TRPs may be arranged based on different spatial positions, antenna configurations, and boresight directions. Different beams (e.g., transmission beams, reception beams, pairs of a transmission beam and a reception beam) may be formed for the respective channels configured between the TRPs and the terminal. The base station may perform multi-beam transmission using multiple TRPs. Transmission reliability may be improved through a beam selection gain or beam diversity gain. A multi-TRP transmission scheme may be referred to as coordinated multipoint (CoMP). The TRPs participating in multi-TRP transmission may belong to the same base station or the same serving cell. Alternatively, the TRPs participating in multi-TRP transmission may belong to multiple base stations or multiple serving cells. A backhaul environment between the TRPs may be considered as an ideal backhaul or a non-ideal backhaul. Joint scheduling may be difficult to apply between TRPs connected via a non-ideal backhaul.

A PDCCH reception beam (e.g., TCI) and a PDSCH reception beam (e.g., TCI) of the terminal may be individually managed by the base station. A TCI of a PDCCH may be configured for a CORESET corresponding to the PDCCH. The terminal may perform PDCCH monitoring and reception operations in a search space set and PDCCH candidates corresponding to the CORESET based on a TCI state included in configuration information of the CORESET. In the present disclosure, a signal reception operation based on a TCI may include operations such as determination and application of a reception beam, channel estimation, etc. A TCI of a PDSCH may be configured (e.g., indicated) separately from the TCI of the PDCCH. The TCI of the PDSCH may be included in a DCI that schedules the PDSCH, and the DCI may be transmitted to the terminal. In other words, the DCI for the PDSCH may be dynamically indicated to the terminal. The base station may select one TCI from among candidate TCI(s) for the PDSCH (e.g., activated candidate TCI(s) for the PDSCH) configured in the terminal through higher-layer signaling, and may indicate the selected TCI to the terminal through a scheduling DCI. In multi-TRP transmission, a DCI may include multiple TCIs, and the terminal may perform PDSCH reception using the indicated multiple TCIs. A TCI of another downlink signal (e.g., CSI-RS, TRS, PRS) may be determined independently of the TCI of the PDCCH or the PDSCH.

In uplink, a PUCCH transmission beam (e.g., TCI) and a PUSCH transmission beam (e.g., TCI) of the terminal may be individually managed. A TCI (e.g., transmission spatial filter or spatial relation information) of a PUCCH may be semi-statically configured to the terminal. A TCI (e.g., transmission spatial filter or spatial relation information) of a PUSCH may be semi-statically configured. Alternatively, the TCI of the PUSCH may be included in a scheduling DCI, and the scheduling DCI may be transmitted to the terminal. In other words, the TCI of the PUSCH may be dynamically indicated to the terminal. The TCI of the PUSCH may be indirectly indicated by SRS resource indication information, and the terminal may transmit the PUSCH by applying the same TCI (e.g., transmission spatial filter or spatial relation information) as that configured for an indicated SRS resource to the PUSCH. A TCI of another uplink signal (e.g., SRS or PRACH) may be determined independently of the TCI of the PUCCH or the PUSCH.

According to the above-described method, since individual beam management can be performed for each transmission signal or channel, a high degree of freedom and flexibility may be obtained. When a beam is to be collectively changed for all signals, an individual signaling procedure is required for each signal, which may result in large signaling overhead and increased delay time for beam management.

To solve the above-described issues, a method of indicating a TCI for multiple signals (e.g., physical signals and/or physical channels) to the terminal through a single signaling procedure may be considered. In downlink, the terminal may receive an indication of a downlink TCI through a DCI, and the indicated downlink TCI may be applied to both a PDCCH and a PDSCH. The indicated downlink TCI may be applied not only to the PDCCH and PDSCH but also to other downlink signals (e.g., CSI-RS, TRS, PRS). In uplink, the terminal may receive an indication of an uplink TCI through a DCI, and the indicated uplink TCI may be applied to both a PUCCH and a PUSCH. The indicated uplink TCI may be applied not only to the PUCCH and PUSCH but also to other uplink signals (e.g., SRS, PRACH). The downlink TCI and the uplink TCI may be individually indicated through different DCIs. Alternatively, the downlink TCI and the uplink TCI may be jointly indicated through the same DCI. The downlink TCI may match the uplink TCI. In this case, the TCI may be referred to as 'joint TCI'. The joint TCI may be indicated to the terminal through a DCI. The joint TCI may be applied to both the above-described downlink signals (e.g., PDCCH, PDSCH, and signals other than the channels) and the above-described uplink signals (e.g., PUCCH, PUSCH, and signals other than the channels). Since the above-described TCI is equally applied to multiple signals (e.g., physical signals and/or physical channels), it may be referred to as 'unified TCI' or 'single TCI'.

A signal to which a unified TCI is applied may be a signal for transmitting terminal-specific (UE-specific) information. For example, a PDSCH may include unicast data (e.g., DL-SCH). A PDCCH may include a DCI that schedules a data channel including unicast data (e.g., PDSCH, PUSCH, PSSCH) or a DCI including UE-specific control information. The PDCCH may be a PDCCH transmitted in a USS set and/or a specific CSS set (e.g., Type 3 CSS set). CSI-RS, TRS, PRS, and the like may be configured in a UE-specific manner. In other words, the CSI-RS, TRS, PRS, and the like may be signals transmitted in a UE-specific manner. As another example, a PUSCH may include unicast data (e.g., UL-SCH). SRS, PRACH, and the like may be configured in a UE-specific manner. In other words, the SRS, PRACH, and the like may be signals transmitted in a UE-specific manner. The UE-specific signal may be configured to the terminal through UE-specific RRC signaling procedure, MAC CE, DCI, or the like.

A unified TCI may be indicated by a scheduling DCI. A downlink DCI format (e.g., DCI format 1_1, 1_2) for PDSCH scheduling may be used to indicate the TCI (e.g., unified TCI).

FIG. 3 is a conceptual diagram illustrating a first exemplary embodiment of a TCI indication method using DCI.

Referring to FIG. 3, a base station may transmit a downlink DCI that schedules a PDSCH. A terminal may receive the downlink DCI that schedules the PDSCH. The terminal may identify an indication of a TCI based on the downlink DCI. In general, a DCI may schedule a PDSCH, but if a specific field(s) of the aforementioned DCI is set to a predefined value, the DCI may not schedule a PDSCH. In this case, the DCI may be used for another purpose. Even when a scheduling DCI is used for a purpose other than PDSCH scheduling, the terminal may identify an indication of a TCI from the scheduling DCI. The terminal may report a HARQ-acknowledgment (ACK) to the base station in response to reception of the PDSCH or the downlink DCI. The HARQ-ACK may be composed of an ACK or a NACK. Alternatively, the HARQ-ACK may be composed of only an ACK. A transmission resource of the HARQ-ACK (e.g., PUCCH resource) may be determined based on a position of a resource of the PDSCH. Even when a PDSCH is not transmitted, a transmission resource of the HARQ-ACK may be determined based on a virtual PDSCH resource allocated by the DCI.

According to the above-described operation, a beam quality measurement and reporting operation of the terminal may be triggered by the base station. The terminal may perform the beam measurement operation based on a downlink signal (e.g., SSB, CSI-RS, etc.) configured (e.g., indicated) by the base station and may transmit a measurement result to the base station through an uplink resource (e.g., PUCCH, PUSCH, etc.) configured (or indicated) by the base station. In the above-described operation, an entity that determines and manages a beam of the terminal may be the base station. The base station may determine and manage the most suitable transmission and reception beams for the terminal based on a beam report (e.g., the measurement result) received from the terminal. When a beam change is necessary, the base station may indicate a new beam to the terminal through a beam-related signaling message (e.g., TCI, spatial relation information, QCL, etc.).

The above-described method has the following issues in terms of signaling overhead and beam switching delay. To reduce the beam switching delay, a periodicity of the uplink resource for beam reporting of the terminal needs to be short. However, due to the short periodicity of the uplink resource for beam reporting, the signaling overhead may increase. On the other hand, if the periodicity of the uplink resource for beam reporting is set to be long to reduce the signaling overhead, the beam switching delay may increase, and as a result, the link performance may deteriorate. In other words, the signaling overhead and the beam switching delay may have a trade-off relationship.

As a method to solve the above-described issue, a method in which the beam quality measurement and reporting operation of the terminal is triggered by the terminal itself may be considered. When the terminal determines that a beam change is necessary, the terminal may autonomously trigger a beam reporting operation. For example, the terminal may transmit beam report information to the base station using a pre-configured uplink resource (e.g., PUCCH resource, PUSCH resource, PRACH resource, SRS resource, etc.) only when beam reporting is necessary. Alternatively, the terminal may request a second uplink resource (e.g., PUCCH resource, PUSCH resource) for beam reporting using a pre-configured first uplink resource (e.g., PUCCH SR resource, PRACH resource, SRS resource) and may transmit the beam report information to the base station using the second uplink resource. The uplink resources may be placed at optimal positions based on a time when the terminal performs the beam quality measurement operation. According to the above-described operation, a delay time (e.g., beam switching delay) from a time when the terminal determines that a beam change is necessary to a beam reporting time may be reduced, and the uplink resources required for beam reporting may also be minimized. Hereinafter, specific exemplary embodiments of the beam reporting method and the beam switching method initiated by the terminal will be described.

### [Beam reporting method triggered by terminal]

The operation in which the terminal triggers beam reporting may be performed in an event-driven manner. For example, a trigger condition for beam reporting may be that a quality of a currently applied beam does not satisfy a reference value. In other words, when the quality of the currently applied beam does not satisfy the reference value, the terminal may trigger a beam reporting operation. For example, the terminal may periodically measure a metric (e.g., layer 1 reference signal received power (L1-RSRP), layer 1 signal-to-interference-plus-noise ratio (L1-SINR), hypothetical SINR, etc.) for a CSI-RS or an SSB, which is a QCL source signal (e.g., source beam) of a currently applied unified TCI. If the metric falls below the reference value (e.g., if the beam quality is determined to be degraded), the terminal may trigger the beam reporting operation for a purpose of changing the unified TCI. The measurement operation (e.g., beam measurement operation) may be performed in periodic downlink resource(s). The base station may transmit configuration information of the periodic downlink resource(s) to the terminal, and the terminal may receive the configuration information of the periodic downlink resource(s) from the base station. The beam measurement operation may be performed in the periodic downlink resource(s) indicated by the configuration information. The beam measurement operation may be performed N times in the periodic downlink resource(s). Results of the N beam measurement operations may be compared with the reference value. N may be a natural number. The beam measurement operation for the received signal may be performed within a pre-configured time interval, and the pre-configured time interval may include one or more downlink resource periods. The downlink resource may correspond to (e.g., be associated with) a first TCI (e.g., activated TCI) belonging to a TCI list configured for the terminal. In other words, the first TCI may be applied to the downlink resource. The beam report information generated based on the results of the beam measurement operations may at least include an index of the downlink resource (e.g., periodic downlink resource). The reference value may be a value quantified based on the beam quality metric described above. The reference value may be a beam quality of the downlink resource corresponding to (e.g., associated with) the current beam of the terminal. The reference value may remain unchanged during the interval in which the beam measurement operation is performed. The reference value may indicate a beam quality value of a reference beam. For example, the reference beam may be a certain candidate beam to be described later, and the terminal may trigger the beam reporting operation when the beam quality of the current beam deteriorates compared to the beam quality of the certain candidate beam. The CSI-RS may be periodically transmitted to the terminal. The CSI-RS may be a channel measurement resource (CMR). Alternatively, when L1-RSRP is used as the beam measurement metric, the CSI-RS may include both a CMR and an interference measurement resource (IMR). In other words, the beam quality measurement operation may be performed based on multiple non-zero power (NZP) CSI-RS resources or zero power (ZP) CSI-RS resources.

According to the above-described operation, the terminal may perform a beam quality measurement operation for a CSI-RS or an SSB corresponding to the current beam. When the beam quality measurement operation is performed for a CSI-RS corresponding to the current beam, a CSI-RS for a specific purpose (e.g., beam management or tracking) may be configured as a QCL source signal of the TCI, and the terminal may perform the beam quality measurement operation for the CSI-RS, which is the QCL source signal of the current TCI. The terminal may measure L1-RSRP, etc. for one or more CSI-RS resource(s) of the CSI-RS. When the beam quality measurement operation is performed for an SSB corresponding to the current beam, the SSB may be configured as a QCL source signal of the TCI, and the terminal may perform the beam quality measurement operation for the SSB, which is the QCL source signal of the current TCI. Alternatively, the terminal may perform the beam quality measurement operation for an SSB having a QCL relationship with the CSI-RS, which is the QCL source signal of the TCI. The SSB may be a cell-defining-SSB (CD-SSB), and the CD-SSB may be configured for the terminal by an RRC message that includes at least one of an MIB, SIB, or serving cell common configuration information. Alternatively, the SSB may be a non-CD (NCD)-SSB configured in an activated downlink bandwidth part. When an NCD-SSB is configured in the activated downlink bandwidth part, the terminal may perform the beam quality measurement operation for the current beam or candidate beam using the NCD-SSB, and reception of the CD-SSB may be omitted.

The measurement value may be a result obtained from a single measurement for the downlink resource. Alternatively, the measurement value may be a result (e.g., average value) obtained from multiple measurements for multiple downlink resources. The determination of beam quality degradation may be performed one or more times. If the beam quality metric falls below the reference value for a predefined number M of times (e.g., preconfigured number M of times) for the same resource of the current beam, the terminal may finally determine that the beam quality has degraded and may trigger the beam reporting operation. Additionally to or alternatively from the above-described operation, if the beam quality metric satisfies the reference value for the predefined number N of times (e.g., preconfigured number N of times) for the same resource of a candidate beam, the terminal may determine that a new beam for replacement has been found and may also trigger the beam reporting operation. In an exemplary embodiment, N may be equal to M. Alternatively, N may be different from M. Each of N and M may be a natural number. The beam reporting trigger condition by the terminal may be related to both the current beam measurement count M and the candidate beam measurement count N. In general, N may be defined or set as a separate value from M. The above-described operations may be referred to as filtering and may be performed in a physical layer of the terminal. In other words, signaling between the physical layer and a higher layer to obtain the measurement values may not be necessary. The multiple downlink resources may be resource occasions configured (e.g., transmitted) over multiple periods for the same CSI-RS resource or the same SSB resource. Alternatively, the multiple downlink resources may be multiple different CSI-RS resources and/or SSB resources.

The reference value for beam quality may remain unchanged across multiple measurement operations. In other words, all multiple measurement values for the current beam may be compared with a single reference value (e.g., a beam quality measurement value of the candidate beam). Similarly, all multiple measurement values for the candidate beam may be compared with a single reference value (e.g., a beam quality measurement value of the current beam). Meanwhile, when the terminal performs beam quality measurement operations for multiple beams for the same resource (e.g., a resource of the current beam or a resource of the candidate beam), the reference value may change due to a new measurement for the reference beam (e.g., candidate beam or current beam). In this case, the beam quality measurement operation may be suspended. Alternatively, the beam quality measurement operation may be restarted based on the updated reference value. Alternatively, the terminal may continue the remaining beam quality measurement operations while applying the previously used reference value.

As another method, the beam quality reference value may be updated while multiple measurement operations are being performed. For example, the terminal may perform the beam quality measurement operation for a first resource of the current beam. The measurement value of the beam quality measurement operation for the first resource may be referred to as a first reference value. Then, the terminal may perform the beam quality measurement operation for a first resource of the candidate beam, and if a measurement value of the beam quality measurement operation is higher than the first reference value, the terminal may determine for the first time that a new beam for replacement has been found. Subsequently, the terminal may perform the beam quality measurement operation for a second resource of the current beam. A measurement value of the beam quality measurement operation for the second resource may be referred to as a second reference value, and the second reference value may be different from the first reference value. Then, the terminal may perform the beam quality measurement operation for a second resource of the candidate beam, and if a measurement value of the beam quality measurement operation is higher than the second reference value, the terminal may determine for the second time that a new beam for replacement has been found. In other words, the reference value (e.g., the beam quality reference value) may be updated based on a new measurement of the reference beam while the multiple measurement operations are being performed.

As another method, when multiple reference values are generated while performing multiple measurement operations, the terminal may derive a representative reference value based on the multiple reference values and apply the representative reference value commonly to the multiple measurement operations to determine the beam reporting trigger condition. For example, the representative reference value may be one (e.g., the largest value, the median value, or the smallest value) of the multiple reference values. As another example, the representative reference value may be a new value (e.g., average value) derived from the multiple reference values.

Alternatively, a subsequent operation of the terminal may be determined based on a relationship between the second reference value and the first reference value. For example, the second reference value may have a value that is not higher than the first reference value. In this case, the multiple beam measurement operations of the terminal may continue, and event counting may be maintained. On the other hand, if the second reference value is higher than the first reference value, the event previously determined by the terminal may no longer be valid. In this case, the terminal may reset the event count to zero and restart the beam measurement operation.

The trigger condition for beam reporting may include a case that the terminal discovers a new candidate beam to replace the currently used beam (e.g., current beam). Since application of the new candidate beam is finally determined or confirmed by the base station, referring to it as a candidate beam may be appropriate. In the present disclosure, the terms 'new candidate beam', 'candidate beam', and 'target beam' may be used interchangeably. The terminal may measure beam quality(ies) (e.g., L1-RSRP, L1-SINR, hypothetical SINR, etc.) for beam(s) constituting a preconfigured beam set and may determine one or more beams among beam(s) that satisfy the reference value as new beam(s) to replace the current beam. The new beam may be a different beam from the currently used beam (e.g., current beam). The beam set may refer to a set of TCIs (or TCI states), and each beam constituting the beam set may refer to a QCL source signal (e.g., SSB, CSI-RS, SRS, etc.) of the TCI.

In exemplary embodiments, a QCL source signal (e.g., source beam) of a TCI may be interpreted as a QCL source signal for a spatial reception parameter (e.g., QCL Type D). For example, a TCI for which a QCL source signal (e.g., source beam) is an uplink signal (e.g., uplink beam) may refer to a TCI for which a source signal for spatial reception parameters or QCL Type D is configured as an uplink resource. A TCI for which a QCL source signal (e.g., source beam) is a downlink signal (e.g., downlink beam) may refer to a TCI for which a source signal for spatial reception parameters or QCL Type D is configured as a downlink resource. A TCI without a QCL source signal (e.g., source beam) may refer to a TCI for which a source signal for spatial reception parameters or QCL Type D is not configured. The above-described TCI may include a source signal for other QCL parameters (e.g., delay spread, Doppler spread, Doppler shift, average gain, average delay, etc.) or other QCL types (e.g., QCL Type A, B, C, etc.).

As a proposed method, the terminal may autonomously determine a transmission direction in which a new beam is to be used. The terminal may identify a transmission direction of the beam and report the new beam to the base station. For example, the terminal may report information on the new beam and information on the transmission direction of the beam to the base station. Alternatively, the terminal may report beam information to the base station, including information on the transmission direction of the beam. The above-described method(s) may be referred to as (Method 100).

The terminal may perform beam management operations based on a unified TCI framework. According to exemplary embodiments, the terminal may receive an indication of a downlink TCI (e.g., downlink unified TCI) and an uplink TCI (e.g., uplink unified TCI) from the base station. The terminal may perform a downlink reception operation and/or an uplink transmission operation based on each of the indicated TCIs. The terminal may determine whether the above-described beam reporting trigger condition is satisfied for each of downlink and uplink. If the beam reporting trigger condition is satisfied, the terminal may perform beam reporting. For example, the terminal may determine that a beam quality of the currently applied downlink TCI has deteriorated and may search for a new beam to replace the current downlink TCI. The terminal may determine a first beam satisfying a reference value as a new beam (e.g., a candidate beam that may be indicated as a downlink TCI). The new beam may be searched for within a downlink TCI pool (e.g., downlink TCI state pool, downlink TCI list), and the first beam (e.g., a downlink TCI corresponding to the first beam) may belong to the downlink TCI pool. The terminal may determine that a beam quality of the currently applied uplink TCI has deteriorated and may search for a new beam to replace the current uplink TCI. The terminal may determine a second beam satisfying a reference value as a new beam (e.g., a candidate beam that may be indicated as an uplink TCI). The new beam may be searched for within an uplink TCI pool (e.g., uplink TCI state pool, uplink TCI list), and the second beam (e.g., an uplink TCI corresponding to the second beam) may belong to the uplink TCI pool. The reference value may refer to a value quantified based on the above-described beam quality metric. The reference value may indicate a beam quality value of a reference beam. For example, the reference beam may be the currently applied beam, and the terminal may trigger the beam reporting operation when the beam quality of the candidate beam is superior to the beam quality of the current beam.

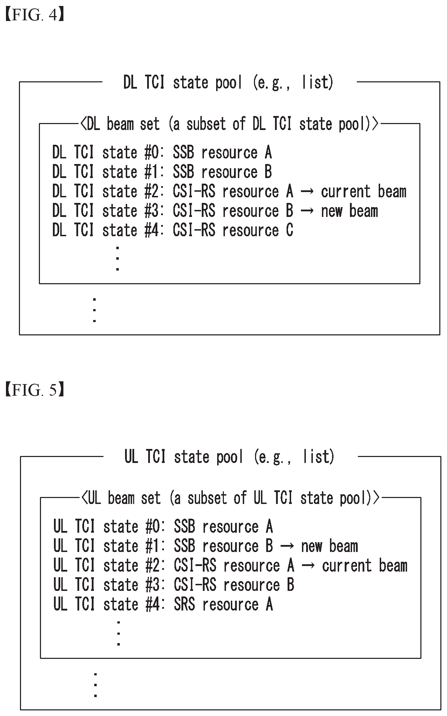

FIG. 4 is a conceptual diagram illustrating a first exemplary embodiment of a method for configuring a candidate beam set for a downlink TCI.

Referring to FIG. 4, a downlink candidate beam set may be determined based on a downlink TCI pool (e.g., downlink TCI list, downlink TCI set). Specifically, the downlink candidate beam set may be a subset of the downlink TCI pool. In the present disclosure, the expression 'a set A is a subset of a set B' may include a case where the set A is identical to the set B. The downlink candidate beam set may at least include five TCIs indexed from 0 to 4, and each TCI may have an SSB resource or a CSI-RS resource as a QCL source signal. The downlink candidate beam set may be configured as a set of TCIs (or TCI indexes). Alternatively, the downlink candidate beam set may include source signals of the TCIs, such as an SSB Resource A, SSB Resource B, CSI-RS Resource A, CSI-RS Resource B, and CSI-RS Resource C. The downlink candidate beam set may be configured as a set of downlink resources (e.g., downlink resource indexes) corresponding to the downlink TCIs. A method in which only CSI-RS is used as a QCL source signal may be applied. In this case, a DL TCI #0 and a DL TCI #1 shown in FIG. 4 may be excluded from the downlink candidate beam set. The terminal may measure a beam quality based on the CSI-RS Resource A, which is the QCL source signal of the TCI #2, the current downlink beam, and may determine that the quality of TCI #2 has deteriorated based on the beam quality measurement result. In this case, the terminal may search for a new downlink beam within the downlink candidate beam set. Alternatively, the terminal may perform beam quality measurement for the CSI-RS Resource A, the current downlink beam, and candidate beams. For example, if a beam quality measured based on the CSI-RS Resource B corresponding to the TCI #3 (e.g., DL TCI #3) satisfies the reference value (e.g., if the beam quality of the CSI-RS Resource B is higher than that of the CSI-RS Resource A), the terminal may determine the TCI #3 as a new downlink candidate beam and the report the TCI #3 to the base station as a new candidate beam for the downlink TCI.

FIG. 5 is a conceptual diagram illustrating a first exemplary embodiment of a method for configuring a candidate beam set for an uplink TCI.

Referring to FIG. 5, an uplink candidate beam set may be determined based on an uplink TCI pool (e.g., uplink TCI list, uplink TCI set). Specifically, the uplink candidate beam set may be a subset of the uplink TCI pool. The uplink TCI pool and the uplink candidate beam set may be independently configured or determined from the downlink TCI pool and the downlink candidate beam set. In other words, the uplink TCI pool may be the same as or different from the downlink TCI pool, and the uplink candidate beam set may be the same as or different from the downlink candidate beam set. The uplink candidate beam set may at least include five TCIs indexed from 0 to 4, and each TCI may have an SSB resource, a CSI-RS resource, or an SRS resource as a QCL source signal. The uplink candidate beam set may be configured as a set of TCIs (e.g., TCI indexes). Alternatively, the uplink candidate beam set may include source signals of the TCIs, such as an SSB Resource A, SSB Resource B, CSI-RS Resource A, CSI-RS Resource B, and/or SRS Resource A. The uplink candidate beam set may be configured as a set of downlink/uplink resources (e.g., uplink/downlink resource indexes) corresponding to the uplink TCIs. Alternatively, a method in which only CSI-RS and SRS are used as QCL source signals may be applied. In this case, the UL TCI #0 and UL TCI #1 may be excluded from the uplink candidate beam set. The terminal may measure a beam quality based on the CSI-RS Resource A, which is the QCL source signal of the TCI #2, the current uplink beam, and may determine that the quality of TCI #2 has deteriorated based on the beam quality measurement result. In this case, the terminal may search for a new uplink beam within the uplink candidate beam set. Alternatively, the terminal may perform beam quality measurement for the CSI-RS Resource A, the current uplink beam, and candidate beams. For example, if the beam quality measured based on the SSB Resource B corresponding to the TCI #1 satisfies the reference value (e.g., if the beam quality of the SSB Resource B is higher than that of the CSI-RS Resource A), the terminal may determine the TCI #1 as a new uplink candidate beam and report the TCI #1 to the base station as a new candidate beam for the uplink TCI.

According to another exemplary embodiment, the terminal may receive an indication of a joint TCI (e.g., joint unified TCI) from the base station. The terminal may perform a downlink reception operation and/or an uplink transmission operation based on the indicated joint TCI. The terminal may determine whether the above-described beam reporting trigger condition is satisfied for the joint TCI without distinguishing a transmission direction and may perform beam reporting based on a result of the determination. For example, the terminal may determine that a beam quality of the currently applied joint TCI has deteriorated and may search for a new beam to replace the current joint TCI. The terminal may determine a third beam that satisfies a reference value as a new beam (e.g., a candidate beam that may be indicated as a joint TCI). The new beam may be searched for within a joint TCI pool (e.g., joint TCI state pool, joint TCI list) or the downlink TCI pool (e.g., downlink TCI state pool, downlink TCI list). The third beam (e.g., joint TCI corresponding to the third beam) may belong to the joint TCI pool or the downlink TCI pool.

Meanwhile, a beam reporting operation for a terminal that does not support a unified TCI frame work or a beam reporting operation for physical signals/channels to which a unified TCI is not applied may also be triggered by the terminal. In the present disclosure, a downlink TCI may be interpreted as a downlink beam (e.g., reception beam, QCL, QCL Type D) for a specific downlink physical signal/channel (e.g., PDCCH, PDSCH, CSI-RS), and an uplink TCI may be interpreted as an uplink beam (e.g., transmission beam, spatial relation information, QCL) for a specific uplink physical signal/channel (e.g., PUCCH, PUSCH, SRS). A joint TCI may be interpreted as a beam commonly applied to both a downlink signal/channel and an uplink signal/channel. Based on the above interpretation, the beam measurement and reporting operation of the terminal may be performed in the same manner even when a unified TCI is not configured.

The beam quality measurement operation and event determination operation in the terminal may be performed for a beam set or a corresponding signal set. In downlink, a downlink signal set composed of downlink signals (e.g., downlink physical signals and/or channels) or a downlink beam set composed of QCL source beams corresponding to the downlink signal set may be configured. The terminal may determine that downlink beams of a serving cell have deteriorated when beam qualities of all signals belonging to the downlink signal set (or downlink beam set) are measured to be below a reference value. As another method, the beam quality measurement operation and event determination operation for a downlink beam in the terminal may be performed for each downlink signal. For example, an event in which a quality of a QCL source beam for a PDCCH (e.g., CORESET) deteriorates and an event in which a quality of a QCL source beam for a CSI-RS deteriorates may be distinguished from each other, and the beam reporting operation may be triggered by at least one of these events. In other words, the beam reporting operation may be triggered even when only some of the downlink beams configured or indicated for the terminal experience quality degradation. The above-described operation may be identically defined for uplink. The downlink (or uplink) signal set or downlink (or uplink) beam set may be configured for the terminal by the base station. A specific signal(s) may be permanently included in the signal set or the beam set. For example, reception beam(s) of a downlink control channel (e.g., CORESET beams or CORESETs) may be by default included in the beam set. As another example, a signal set or a beam set including both downlink signals/beams and uplink signals/beams may be configured for the terminal, and the beam quality measurement operation or event determination operation in the terminal may be performed for the configured signal set or beam set. For example, when an event occurs in which all downlink beams and uplink beams selected as a beam set by the base station deteriorate, the terminal may trigger a beam reporting operation.

Referring to the above-described exemplary embodiments, the beams configured for the terminal may include both beam(s) corresponding to a unified TCI (hereinafter referred to as 'first beam') and beam(s) of a signal that does not follow a unified TCI (hereinafter referred to as 'second beam'). The number of the second beams may be one or multiple, depending on the beam configuration for downlink physical signals and channels. For example, the second beam(s) may include a TCI activated for the CORESET 0 and/or a TCI activated for a CORESET that is configured not to follow a unified TCI. The second beam(s) may include a periodic CSI-RS or a QCL source beam of a periodic CSI-RS. In uplink, the second beam(s) may include a periodic SRS or a QCL source beam of a periodic SRS. Similarly, the number of the first beams may be one or multiple, depending on whether a multi-TRP transmission scheme is applied.

According to an exemplary embodiment, the beam reporting method triggered by the terminal may be applied to both the first beam and the second beam. In this case, the beam quality measurement for the current beam may be performed for both the first beam and the second beam. The first beam and the second beam may be used as reference beams for selecting a new beam. The terminal may trigger a beam reporting operation when the beam quality of at least one of the first beam and the second beam deteriorates. Alternatively, the terminal may trigger a beam reporting operation only when the beam qualities of both the first beam and the second beam deteriorate. Alternatively, depending on the configuration of the first beam and/or the second beam, one of the former triggering operation and the latter triggering operation may be selectively performed. For example, when the second beam includes at least a CORESET beam (e.g., TCI for the CORESET 0), the terminal may trigger a beam reporting operation even if only the second beam deteriorates. According to the above-described method, both the first beam and the second beam may be involved in the beam quality degradation event, and information related to the first beam and the second beam may belong to the same beam report (e.g., the same CSI reporting configuration). The beam report information may include information that helps determine whether the first beam and/or the second beam has deteriorated, and the base station may appropriately update the beam of the terminal based on the above information (e.g., beam report information).

According to another exemplary embodiment, the beam reporting method triggered by the terminal may be applied only to the first beam. In other words, the beam quality value and/or beam quality degradation status of the second beam may be reported to the base station through a separate beam reporting procedure (e.g., a legacy beam reporting procedure or a beam reporting procedure triggered by an indication from the base station). In this case, the beam report for the first beam and the beam report for the second beam may be included in the same CSI reporting configuration, and the beam report for the first beam and the beam report for the second beam may be transmitted together through the same uplink resource. Alternatively, the beam report for the first beam and the beam report for the second beam may belong to different CSI reporting configurations. In this case, an uplink transmission including the beam report for the first beam and an uplink transmission including the beam report for the second beam may differ from each other. The uplink transmission including the beam report for the first beam and the uplink transmission including the beam report for the second beam may collide within the same reference unit time (e.g., the same slot or the same symbol(s)). For example, a first uplink resource (e.g., PUCCH, PUSCH) including the beam report information for the first beam and a second uplink resource (e.g., PUCCH, PUSCH) including the beam report information for the second beam may be mapped to the same slot.

In this case, the beam report information for the first beam and the beam report information for the second beam may be multiplexed. The beam report information for the first beam and the beam report information for the second beam may be transmitted to the base station through the first uplink resource, the second uplink resource, or another uplink resource different from both the first and second uplink resources. The another uplink resource may be one of preconfigured candidate resources for the terminal and may be determined based on a predefined rule. As another method, the terminal may select one of the first uplink resource and the second uplink resource based on a prioritization rule, transmit the beam report information to the base station using the selected uplink resource, and drop the unselected uplink resource. The priority may be defined between the beam report information for the first beam and the beam report information for the second beam. For example, since the first beam based on a unified TCI is applied to most UE-specific signals, the first beam may have a higher priority than the second beam. Alternatively, the second beam, which may include a beam for a CORESET, may have a higher priority than the first beam corresponding to a UE-specific transmission. Alternatively, the second beam may be further classified, and a different priority may be applied according to a signal/channel type of the second beam. As another method, the beam report information may be transmitted through both the first uplink resource and the second uplink resource. For example, the first uplink resource and the second uplink resource may be mapped to different symbol sets or different sub-slots within the same slot, and the terminal may transmit the beam report information through both uplink resources. The transmission operations in the first uplink resource and the second uplink resource may be applied differently depending on the number of first beams and/or the number of second beams.

It may be inefficient to transmit configuration information from the base station to the terminal to update a signal set or a beam set whenever beam(s) of the terminal change. A method in which the terminal autonomously updates the signal set or the beam set according to a predetermined rule whenever beam(s) of the terminal change may be considered. For example, when N existing beam(s) are replaced with N new beam(s), the beam set may further include the existing beams and the N new beams. N may be a natural number. As another example, N changed beam(s) may be added to the beam set, N existing beam(s) may be removed from the beam set, and the size of the beam set may be maintained. In an exemplary embodiment, N may be 1. The update operation of the beam set may be performed only when new beam(s) are included in the beam report information of the terminal. The update operation of the beam set may be performed after the beam reporting operation of the terminal. For example, the terminal may appropriately update the beam set after receiving a response message (e.g., acknowledgment message or beam indication information, which is a response to the beam report) from the base station for the beam report.

According to the exemplary embodiments, a transmission direction in which a beam quality degradation event has occurred and a transmission direction of a new candidate beam may match. As a method to expand a range of candidate beams, restriction on the transmission direction may be relaxed or removed. For example, the terminal may search for a beam to replace a downlink TCI with degraded quality from an uplink TCI pool. Alternatively, the terminal may search for a beam to replace an uplink TCI with degraded quality from a downlink TCI pool. These operations may correspond to (Method 200), which will be described later.

The terminal may report information on the determined candidate beam (e.g., candidate beam information) to the base station. The information on the beam transmission direction may be included in the candidate beam information. Alternatively, the information on the beam transmission direction may be reported to the base station along with the candidate beam information. In an exemplary embodiment, the information on the beam transmission direction may be explicitly signaled to the base station. For example, the terminal may report a candidate beam for the downlink TCI to the base station. The candidate beam reporting operation may include an operation in which the terminal reports an index of the downlink TCI (e.g., a TCI index assigned within the downlink TCI pool or downlink TCI list), an index of a QCL source signal of the downlink TCI (e.g., SSB resource index or CSI-RS resource index), and/or a candidate beam or candidate resource index assigned within a downlink beam set to the base station. In the exemplary embodiment of FIG. 4, the terminal may transmit the index (e.g., 3) of the downlink TCI #3 or the index of the CSI-RS resource B as beam report information to the base station. This operation may correspond to notifying that the transmission direction to which the candidate beam is applied is downlink.

The terminal may report a candidate beam for an uplink TCI to the base station. This operation may include the terminal reporting an index of the uplink TCI (e.g., TCI index assigned within the uplink TCI pool or uplink TCI list), an index of a QCL source signal of the uplink TCI (e.g., SSB resource index, CSI-RS resource index, or SRS resource index), and/or a candidate beam or candidate resource index assigned within the uplink beam set to the base station. In the exemplary embodiment of FIG. 5, the terminal may transmit the index (e.g., 1) of the uplink TCI 1 #1 or the index of the SSB resource B as beam report information to the base station. This operation may correspond to notifying that the transmission direction to which the candidate beam is applied is uplink.

The terminal may report a candidate beam for a joint TCI to the base station. This operation may include an operation in which the terminal reports an index of the joint TCI (e.g., TCI index assigned within the joint TCI pool or joint TCI list), an index of a QCL source signal of the joint TCI (e.g., SSB resource index, CSI-RS resource index, or SRS resource index), and/or a candidate beam or candidate resource index assigned within a joint candidate beam set to the base station. Alternatively, the above-described operation (e.g., the candidate beam reporting operation) may include an operation in which the terminal reports the index of the downlink TCI (e.g., TCI index assigned within the downlink TCI pool or downlink TCI list), the index of the QCL source signal of the downlink TCI (e.g., SSB resource index or CSI-RS resource index), and/or the candidate beam or candidate resource index assigned within a downlink candidate beam set to the base station. This operation may correspond to notifying that the transmission direction to which the candidate beam is applied is both downlink and uplink.

Meanwhile, the beam report information may include information on the condition and/or event that triggered the beam reporting. The information on the beam transmission direction may be transmitted to the base station as a part of the information on the beam reporting trigger condition (or event). Alternatively, the information on the beam transmission direction may be derived by the base station based on the reported beam trigger condition (or event). For example, the beam reporting of the terminal may be triggered by an event of beam quality degradation of at least a downlink beam (e.g., downlink TCI or a beam of a downlink signal/channel). In this case, the beam report information including the candidate beam and the event information may be encoded. The base station may determine that the candidate beam is a candidate beam applicable to downlink based on the event information. The above-described operation may be similarly applied when the beam reporting operation is triggered by the quality degradation of an uplink beam (e.g., uplink TCI or a beam of an uplink signal/channel) and/or a joint beam (e.g., joint TCI or a beam commonly applied to both a downlink signal/channel and an uplink signal/channel).

The beam report information may include candidate beam information for a downlink TCI or candidate beam information for an uplink TCI. Alternatively, the beam report information may include only candidate beam information for a downlink TCI, only candidate beam information for an uplink TCI, or both candidate beam information for a downlink TCI and candidate beam information for an uplink TCI. To support this operation, information for distinguishing between a downlink TCI and an uplink TCI (e.g., 1-bit indicator) may be included in the beam report information. As another method, the beam report information may always include both candidate beam information for a downlink TCI and candidate beam information for an uplink TCI. In this case, separate information for distinguishing the transmission direction may not be included in the beam report, and the transmission direction may be interpreted based on an order in which the candidate beams are mapped. For example, in a payload of the beam report information, the candidate beam information for downlink may be mapped first, and the candidate beam information for uplink may be mapped after the candidate beam information for downlink. The base station may interpret an earlier candidate beam information item in the payload of the beam report information (e.g., candidate beam information mapped closer to the most significant bit (MSB)) as being for a downlink TCI, and may interpret a later candidate beam information item in the payload of the beam report information (e.g., candidate beam information mapped closer to the least significant bit (LSB)) as being for an uplink TCI. In this case, when there is no candidate beam for a specific transmission direction, the terminal may map information (e.g., codepoint) indicating absence of candidate beam(s) to the corresponding bit (field).

The aforementioned candidate beam set may be configured to the terminal by the base station. For example, the candidate beam set may be semi-statically configured for the terminal based on an RRC signaling procedure. The candidate beam set may be dynamically configured for the terminal based on a MAC layer signaling procedure. Alternatively, the candidate beam set may be activated or deactivated for the terminal based on a MAC layer signaling procedure. The downlink candidate beam set and the uplink candidate beam set may be configured for the terminal based on separate signaling procedures (e.g., separate RRC messages or separate MAC CEs). Additionally to or alternatively from the above-described operation, the aforementioned candidate beam set may be determined based on a predefined rule. For example, the predefined rule may be a method of including a beam or TCI that satisfies a predetermined condition in the candidate beam set. For example, a beam (e.g., TCI, QCL, etc.) configured for receiving a downlink control channel (e.g., CORESET or a search space set) may be included in the candidate beam set.

Alternatively, a method of excluding a beam, resource, or TCI that satisfies a predetermined condition from the candidate beam set may be considered. In the present disclosure, the exclusion of a beam (or resource or TCI) from the candidate beam set may mean not only that the beam is not included in the candidate beam set but also that the beam is included in the candidate beam set but excluded from the candidate beams. For example, the terminal may perform a beam quality measurement operation for beam(s) other than the beam included in the candidate beam set and, based on a result of the measurement operation, select new candidate beam(s). As a first condition, a currently applied beam (e.g., current beam) may be excluded from the candidate beam set. Since a prerequisite for the terminal to search for a new candidate beam includes determining that a quality of the current beam has degraded, it may be appropriate to exclude the current beam from the candidate beam set. In other words, the current beam may refer to a beam that has been used as a reference for triggering the beam reporting operation. The terminal may configure the candidate beam set by excluding each currently applied downlink TCI, uplink TCI, and/or joint TCI from the downlink candidate beam set, the uplink candidate beam set, and/or the joint candidate beam set.

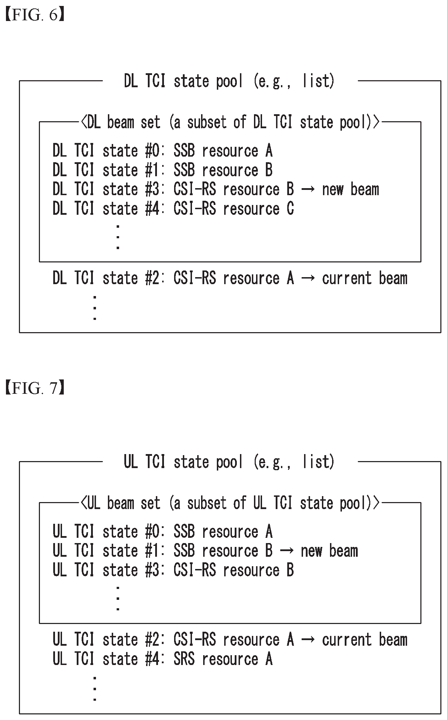

FIG. 6 is a conceptual diagram illustrating a second exemplary embodiment of a method for configuring a candidate beam set for a downlink TCI, and FIG. 7 is a conceptual diagram illustrating a second exemplary embodiment of a method for configuring a candidate beam set for an uplink TCI.

Referring to FIG. 6, a downlink candidate beam set may be configured as a subset of a downlink TCI pool. The exemplary embodiment of FIG. 6 may be similar to the exemplary embodiment of FIG. 4. Referring to FIG. 7, an uplink candidate beam set may be configured as a subset of an uplink TCI pool. The exemplary embodiment of FIG. 7 may be similar to the exemplary embodiment of FIG. 5. Based on the aforementioned first condition, the current beam, which is the downlink TCI #2, may be excluded from the downlink candidate beam set. Based on the aforementioned first condition, the current beam, which is the uplink TCI #2, may be excluded from the uplink candidate beam set. The downlink TCI #2 may be a beam that has been used as a reference for triggering the downlink candidate beam reporting operation, and the uplink TCI #2 may be a beam that has been used as a reference for triggering the uplink candidate beam reporting operation. The downlink TCI #2 or uplink TCI #2 may be used as a reference beam for providing a beam quality threshold for determining a new beam.

As a second condition for determining a beam or TCI to be excluded from the candidate beam set, a TCI for which a QCL source signal (or source beam) is an uplink signal (or uplink beam) or a TCI for which a QCL source signal (or source beam) is not configured may be excluded from the candidate beam set. In other words, the candidate beam set may include only TCI(s) for which a QCL source signal (or source beam) is a downlink signal (or downlink beam). The candidate beam set may not include an uplink resource (or uplink beam) and may include only downlink resource(s) (or downlink beam(s)). As described above, a QCL source signal (or source beam) may refer to a source signal in terms of spatial reception parameters or QCL type D. The beam quality measurement operation of the terminal may be performed based on downlink reception operations, and if a QCL source signal is an uplink resource or if a QCL source signal does not exist, the terminal may have difficulty measuring a beam quality of the TCI. The TCI may not be suitable as a new candidate beam to be determined by the terminal, and it may be appropriate to configure the candidate beam set to be limited to TCIs having a downlink QCL source signal or downlink resources.

The TCI may refer to an uplink TCI, and the candidate beam set may refer to an uplink candidate beam set. For example, the terminal may configure the candidate beam set by excluding an uplink TCI for which a QCL source signal is an SRS resource (or the source beam is an SRS beam), an uplink TCI that does not have a QCL source signal, or an SRS resource from the uplink candidate beam set. Referring again to FIG. 7, the uplink TCI pool may include the uplink TCI #4, and the QCL source signal of the uplink TCI #4 may be an SRS resource (e.g., SRS resource A). Based on the aforementioned second condition, the terminal may exclude the uplink TCI #4 from the uplink candidate beam set. Alternatively, the TCI may include not only an uplink TCI but also a downlink TCI or a joint TCI. For example, the terminal may configure the downlink candidate beam set by excluding a downlink TCI for which a QCL source signal is an SRS resource, a downlink TCI that does not have a QCL source signal, and/or an SRS resource from the downlink candidate beam set. The terminal may configure the joint candidate beam set by excluding a joint TCI for which a QCL source signal is an SRS resource, a joint TCI that does not have a QCL source signal, and/or an SRS resource from the joint candidate beam set.

In addition to the aforementioned conditions, several conditions may be considered to determine a TCI to be excluded from the candidate beam set. For example, an outdated TCI or an outdated resource may be excluded from the candidate beam set. If a valid beam quality measurement result does not exist for a QCL source signal of a certain TCI or a certain resource (e.g., if a valid measurement result does not exist for a CSI-RS or SSB serving as a QCL source of the TCI within a recent X ms, a recent Y slots (or subframes), or a predetermined time window), the TCI or the resource may be considered outdated. X and Y may each be a natural number. In an exemplary embodiment, the valid measurement result may include only measurements based on periodic or semi-persistent signals (e.g., CSI-RS, SSB), and measurements based on aperiodic signals (e.g., CSI-RS) may be considered invalid. For another example, if a QCL source signal of a certain TCI or a certain resource is not configured to be received by the terminal, the certain TCI or the certain resource may be excluded from the candidate beam set. If a certain CSI-RS resource is configured as the QCL source signal of the TCI but a configuration for the certain CSI-RS resource and/or a CSI reporting configuration associated with the certain CSI-RS resource is not configured for the terminal, the certain CSI-RS resource or the TCI having the certain CSI-RS resource as the QCL source signal may be considered unsuitable as a new beam candidate and may be excluded from the candidate beam set.

As another example, a TCI or beam measurement resource may transition to a deactivated state through a signaling procedure (e.g., MAC CE, RRC signaling) from the base station, and the deactivated TCI or the deactivated beam measurement resource may be excluded from the candidate beam set. In other words, the candidate beam set may include only activated TCIs or activated beam measurement resources. In the above-described exemplary embodiments, TCIs included in the downlink candidate beam set and the uplink candidate beam set may be activated TCIs. The aforementioned downlink TCI state pool (or list) and uplink TCI state pool (or list) may be interpreted as a set consisting of activated TCIs or activated resources corresponding to the activated TCIs.

As another example, a beam (or TCI, resource) that has a QCL relationship with the current beam may be excluded from the candidate beam set. As described above, the terminal may measure the beam quality for the SSB corresponding to the current beam and monitor an event of beam quality degradation. Reporting a beam having a QCL relationship with the SSB as a new candidate beam to the base station may not help in updating the current SSB beam. If a certain beam belonging to the candidate beam set has a QCL relationship with the SSB, the terminal may exclude the certain beam from the candidate beam set and may not select the certain beam as a new candidate beam. For example, the certain beam may be a CSI-RS resource or a TCI having a CSI-RS resource as a QCL source signal.

The candidate beam set may be configured for the terminal using an explicit method or an implicit method. When the candidate beam set is configured for the terminal using an explicit method, the candidate beam set may include TCIs (e.g., TCI indexes) or beam measurement resources (e.g., resource indexes). Similarly to the methods described in the above-described exemplary embodiments, the candidate beam set may be configured separately for downlink and uplink or configured in an integrated manner for both downlink and uplink.

When the candidate beam set is configured with beam measurement resources, whether the candidate beam set includes SSB resources may be determined based on the terminal's current beam measurement operation. If the terminal performs the beam measurement operation based on a source signal (e.g., CSI-RS resource) of the currently applied TCI, the candidate beam set may not include SSB resources. For example, the candidate beam set may include CSI-RS resources, and the CSI-RS resources may be limited to CSI-RS resources for beam management or TRS. On the other hand, if the terminal performs the beam measurement operation based on an SSB having a QCL relationship with the currently applied TCI, the candidate beam set may include SSB resources and/or CSI-RS resources. When an SSB resource is reported as a new candidate beam, the base station may select a TCI having a QCL relationship with the SSB resource and may instruct the terminal to apply the selected TCI. When multiple CSI-RS resources have a QCL relationship with one SSB, it may be difficult for the base station to select an appropriate TCI. If the terminal reports an SSB as a new beam, it may be difficult for the terminal to autonomously perform an operation to update the current TCI. Even when the terminal performs the beam measurement operation based on an SSB having a QCL relationship with the currently applied TCI, the candidate beam set may include only downlink resources, such as CSI-RS resources, as described above. In the above-described method, only resources (e.g., CSI-RS resources, SRS resources) configured as source signals of TCIs configured or activated for the terminal may be included in the candidate beam set. If a resource that is not configured as a source signal of the TCI is included in the candidate beam set, the terminal may omit the beam measurement operation for the resource and may exclude the resource from the candidate beam set. The above-described two methods may be selectively applied. In other words, the terminal may receive, through signaling from the base station, information indicating whether to apply a method of measuring the source signal of the current TCI for detecting a beam quality degradation event or a method of measuring an SSB having a QCL relationship with the source signal of the current TCI.

As described above, each candidate beam may match a source signal of a TCI configured or activated for the terminal, or each candidate beam may have at least the same QCL relationship as a source signal of a TCI configured or activated for the terminal. To support the aforementioned operation, each candidate beam may be associated with one or more TCI(s) configured or activated for the terminal. For example, each candidate beam may be associated with a TCI index, and the TCI index associated with each candidate beam may be included in the candidate beam configuration information. The TCI associated with each candidate beam may be a joint TCI. Alternatively, the TCI associated with each candidate beam may be a downlink TCI or an uplink TCI. The candidate beam may be associated with either a downlink TCI or an uplink TCI. Alternatively, the candidate beam may be associated with multiple TCIs. For example, the candidate beam may be associated with at least one downlink TCI and at least one uplink TCI. According to the aforementioned method, the terminal may perform the beam measurement operation based on the source signal of the TCI associated with each candidate beam without requiring a separate SSB or CSI-RS configuration for the beam measurement of the candidate beam. The signaling overhead for candidate beam configuration may be reduced.

As another method, a method for configuring resources corresponding to candidate beams separately for the terminal may be considered. For example, one CSI-RS resource set may be used for candidate beam configuration. The CSI-RS resource set may be distinguished from other CSI-RS resource sets configured for other purposes (e.g., CSI reporting, legacy beam reporting, radio resource management (RRM)/radio link monitoring (RLM)). For example, information on the purpose of the CSI-RS resource set may be included in configuration information of the CSI-RS resource set, and the configuration information of the CSI-RS resource set may be transmitted to the terminal. The terminal may receive the configuration information of the CSI-RS resource set from the base station and may perform a candidate beam measurement operation using the CSI-RS resource set based on the purpose information included in the configuration information of the CSI-RS resource set. Alternatively, a configuration message (e.g., parameters) of the CSI-RS resource set may be separately defined from configuration messages (e.g., parameters) of CSI-RS resource sets used for other purposes, and the operation of the terminal corresponding to the CSI-RS resource set (e.g., the configuration message of the CSI-RS resource set) may be distinguished from the operation of the terminal corresponding to the CSI-RS resource sets used for other purposes (e.g., the configuration message of the CSI-RS resource sets used for other purposes). Alternatively, the CSI-RS resource set may belong to a specific CSI-RS resource setting (e.g., CSI-RS resource setting with a specific index or CSI-RS resource setting separately defined by specific parameter(s)), and the terminal may use the CSI-RS resource set belonging to the specific CSI-RS resource setting for candidate beam measurement. The CSI-RS resource set may include resource(s) corresponding to candidate beam(s), and the resource(s) may include SSB resource(s) and/or CSI-RS resource(s). The above-described method may be supported only by certain terminals based on UE capability. A terminal that does not support the above-described method may perform a beam measurement operation based on a separate procedure (e.g., method using the above-described association relationship with TCI).

Meanwhile, a certain candidate beam may not be associated with a TCI or may not match a source signal of a certain TCI. The candidate beam (e.g., the certain candidate beam) may be reported to the base station as a new beam. In this case, since the candidate beam is determined to be a valid beam for downlink and/or uplink transmission, the TCI pool (e.g., TCI state pool) may need to be updated to include the candidate beam. The terminal may autonomously perform an operation to update the TCI pool. In other words, when the terminal reports the candidate beam to the base station or when the terminal reports the candidate beam to the base station and receives a response message for the report of the candidate beam, the terminal may add the candidate beam to the corresponding TCI pool. The corresponding TCI pool may be a joint TCI pool, a downlink TCI pool, or an uplink TCI pool. The corresponding TCI pool may be a TCI pool to which a TCI associated with the candidate beam belongs. Alternatively, the corresponding TCI pool may be determined based on a beam failure determination event.

As a method different from (Method 100), the terminal may report the new candidate beam to the base station without distinguishing a transmission direction of the beam. In other words, beam report information may not include information on the transmission direction of the reported beam. This operation may be referred to as (Method 200).

(Method 200) may be performed based on the above-described unified TCI framework. For example, the terminal may perform an operation of identifying a trigger condition for beam reporting based on the unified TCI configured by the base station, as described above. If a beam quality of a current TCI or an SSB having a QCL relationship with the current TCI is determined not to satisfy a reference value, the terminal may search for a new beam within the candidate beam set. The candidate beam set may be determined within an union of a downlink TCI pool and an uplink TCI pool. For example, the candidate beam set may be defined as the union of the downlink TCI pool and the uplink TCI pool. Alternatively, the candidate beam set may be defined as a subset of the union of the downlink TCI pool and the uplink TCI pool. In other words, the terminal may configure beams (e.g., QCL source signals) of all TCIs or beams (e.g., QCL source signals) of some TCIs belonging to the downlink TCI pool and the uplink TCI pool as candidate beams, and may report at least one beam among the candidate beams as a new candidate beam to the base station without distinguishing a transmission direction. Alternatively, the terminal may explicitly receive a configuration for one candidate beam set from the base station without distinguishing a transmission direction, and the candidate beam set may include at least one among CSI-RS resources, SRS resources, or SSB resources.

Even without explicit information on the transmission direction of the beam reported by the terminal, the base station may determine the transmission direction of the reported beam based on an inclusion relationship between the reported beam and the TCI pool. For example, if the reported beam belongs to a downlink TCI, is a source signal of a downlink TCI, or if the reported event is an event related to a downlink beam, the base station may consider the reported beam as a candidate beam for a downlink TCI (e.g., downlink signal/channel). If the reported beam belongs to an uplink TCI, is a source signal of an uplink TCI, or if the reported event is an event related to an uplink beam, the base station may consider the reported beam as a candidate beam for an uplink TCI (e.g., uplink signal/channel). If the reported beam belongs to both a downlink TCI and an uplink TCI, if the reported beam is used for both a source signal of a downlink TCI and a source signal of an uplink TCI, if the reported event includes both an event related to a downlink beam and an event related to an uplink beam, or if the reported event is an event related to both a downlink beam and an uplink beam, the base station may determine that the reported beam is a candidate beam for both a downlink TCI and a uplink TCI (e.g., both a downlink signal/channel and an uplink signal/channel). In this case, the base station may specify the transmission direction of the reported beam based on a predefined rule.

Unlike the descriptions on the above-described exemplary embodiments, a new candidate beam (target beam) to replace a degraded beam may not be found for several reasons. For example, beam qualities of all candidate target beams belonging to the beam set may be measured as below a reference value. Alternatively, if the beam quality reference value changes while performing the beam quality measurement operation for candidate beams, it may be difficult to determine a new candidate beam. Alternatively, even when a beam satisfying the beam quality reference value is found, if a transmission direction of the beam does not match a transmission direction of the existing beam or if the beam is in a deactivated state, the beam may not be suitable for use as a target beam.

In such cases, the beam report information of the terminal may not include information on the new beam (e.g., target beam). The operations according to (Method 100) and (Method 200) assume existence of a target beam. However, even when a target beam is not found, the terminal may trigger the beam reporting operation by distinguishing a beam transmission direction and may transmit beam report information including information on the beam transmission direction to the base station. For example, the beam report information may include at least one event in which a beam transmission direction is distinguished. In other words, the terminal may report, through the beam reporting procedure, an event in which the quality of a downlink beam has degraded and/or an event in which the quality of an uplink beam has degraded to the base station.

The operation of the base station may be determined based on whether the beam report information includes information on a target beam. If the beam report information includes information on a target beam, the base station may transmit a response message confirming application of the target beam to the terminal. Alternatively, the base station may instruct the terminal to apply the target beam through a general beam indication procedure (e.g., unified TCI indication). On the other hand, if the beam report information does not include information on a target beam, the base station may control the terminal to change the beam measurement operation. In other words, the base station may configure new beam measurement target signal(s) for the terminal so that the terminal can search for another valid target beam, and may transmit the measurement target signal(s) to the terminal. The terminal may additionally perform a beam measurement operation on the new signal(s) (e.g., new measurement target signal(s)). If a target beam satisfying the conditions is found, the terminal may report information on the target beam to the base station again. The additional beam measurement operation and reporting need to be completed quickly, and the additional beam measurement operation and reporting may be performed based on a dynamic signaling procedure (e.g., DCI). For example, the beam measurement and reporting of the terminal may be performed based on aperiodic CSI-RS and aperiodic CSI reporting indicated by DCI, respectively. The beam measurement operation may be performed by a CSI-RS that is repeatedly transmitted. CSI-RS occasions constituting the repeated transmission may have the same QCL relationship, and a reception beam of the terminal may be refined through beam measurement and reporting based on the CSI-RS. Alternatively, the CSI-RS occasions constituting the repeated transmission may have independent QCL sources, and a transmission beam of the base station may be refined through beam measurement and reporting based on the CSI-RS. The terminal may recommend a preferred beam procedure to the base station from among the former procedure and the latter procedure. Information on the preferred beam procedure may be transmitted to the base station as assistance information, and the information on the preferred beam procedure may be included in the beam report information.

Both the beam reporting operation including a target beam and the beam reporting operation not including a target beam may be supported by the same beam reporting configuration (e.g., CSI reporting configuration). For example, beam report information including a target beam and beam report information not including a target beam may be transmitted in a first period and a second period according to the CSI reporting configuration, respectively. To support the above-described operation, information indicating whether the beam report information includes a target beam or information indicating that the beam report information does not include a target beam may be included in the beam report information. For example, the presence of a target beam may be represented by one bit, and the information indicating the presence of a target beam may be mapped to a payload of the beam report information. In another example, a certain code point of a field indicating a TCI index of a target beam may be used to inform the base station that no target beam exists. Specifically, the certain code points may not be mapped to any TCI index.

The beam report information may include the beam quality measurement value for the current beam. For example, the terminal may report an L1-RSRP measurement value for the current TCI along with L1-RSRP measurement value(s) for one or more target beam(s) to the base station. The measurement value of the current TCI or the measurement value(s) of the target beam(s) may be expressed as differential values. For example, the measurement value of the current TCI (or SSB) may be expressed as a difference between the measurement value of the current TCI and the measurement value of the target beam. Alternatively, the measurement value of the target beam may be expressed as a difference between the measurement value of the target beam and the measurement value of the current TCI (or SSB). Considering a possibility that multiple target beams are included in single beam report information, the latter method may be advantageous in terms of reducing signaling overhead.

After determining the beam report information according to the above-described method, the terminal may trigger a beam reporting operation. The beam reporting operation of the terminal may be performed using at least two methods. The first method may be a method in which the terminal directly transmits the beam report information in a given uplink resource. The first method may be referred to as (Method 300). The second method may be a method in which the terminal transmits a signal in a given uplink resource (hereinafter referred to as 'first uplink resource') to request another uplink resource (hereinafter referred to as 'second uplink resource') for transmitting the beam report information. The second method may be referred to as (Method 310).

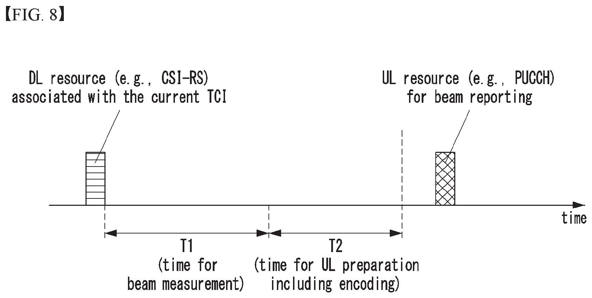

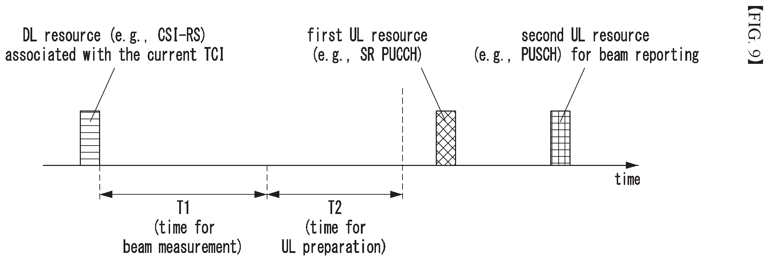

FIG. 8 is a conceptual diagram illustrating a first exemplary embodiment of the beam reporting method according to (Method 300), and FIG. 9 a conceptual diagram illustrating a second exemplary embodiment of the beam reporting method according to (Method 300).

Referring to FIG. 8 and FIG. 9, the terminal may perform a transmission and reception operation of a physical signal based on an unified TCI. The terminal may perform a beam quality measurement operation for a current TCI based on a QCL source signal (e.g., CSI-RS resource) of the currently applied TCI. The current TCI may be a downlink TCI, an uplink TCI, or a joint TCI. The terminal may perform the beam measurement operation based on the QCL source signal, and a time required for the terminal to determine whether the beam quality of the current TCI has degraded may be referred to as T1.

If it is determined that the beam quality of the current TCI (e.g., a beam of a specific signal) has degraded (e.g., is below a reference value or is invalid), the terminal may trigger a beam reporting operation. The terminal may perform a preparation operation for uplink transmission for beam reporting. The preparation operation may include an operation of determining beam report information, an encoding and/or modulation operation for the beam report information, an operation of mapping the beam report information onto uplink physical resources, and an operation of determining the uplink physical resources for transmitting the beam report information. A time required for the preparation operation may be referred to as T2. Values corresponding to T1 and T2 may be predefined in technical specifications. Alternatively, the values corresponding to T1 and T2 may be configured to the terminal by the base station. T1 and T2 may not be defined separately, and a value corresponding to (T1+T2) may be defined in technical specifications. Alternatively, the value corresponding to (T1+T2) may be configured to the terminal by the base station. The value corresponding to T1, T2, or (T1+T2) may be expressed as the number of symbols, the number of slots, or a sum of the number of symbols and the number of slots. T1 may additionally include a time required for performing operations other than the aforementioned beam measurement operation and degradation determination operation of the terminal. T2 may additionally include a time required for performing operations other than the aforementioned uplink transmission preparation operation.

According to the exemplary embodiment of FIG. 8, the terminal may determine the uplink resource for transmitting the beam report information and perform the beam reporting operation based on the determined uplink resource. The uplink resource may be the earliest resource appearing after (T1+T2) from the CSI-RS resource among uplink resources configured for beam reporting. The uplink resource may be a periodic PUCCH resource or a semi-persistent PUCCH resource. The uplink resource(s) may include periodic PUCCH resources and semi-persistent PUCCH resources, and the determined uplink resource may be a periodic PUCCH resource or a semi-persistent PUCCH resource that satisfies the above-described time relationship. The uplink resource may include an aperiodic PUCCH resource. For example, the terminal may select the earliest resource among the PUCCH resources that satisfy the above-described time relationship regardless of the time-domain characteristics of the PUCCH resources, and may report a new candidate beam using the selected earliest resource.

Valid uplink resources may include a PUSCH. The valid uplink resources may be used for the transmission of the beam report information. For example, the valid uplink resource may include a configured grant PUSCH, and the beam report information may be included in uplink control information (UCI) or configured grant-UCI (CG-UIC), and the UCI or CG-UCI may be transmitted to the base station as being multiplexed with the configured grant PUSCH. The valid uplink resources may include a dynamically scheduled PUSCH. The terminal may perform the beam reporting operation in the earliest PUSCH resource that satisfies the above-described time relationship regardless of the scheduling type. As a method to minimize the beam reporting delay time, the terminal may perform the beam reporting operation in the earliest resource that satisfies the above-described time relationship among the above-described PUCCH resources and PUSCH resources. The earliest resource may be a PUCCH or PUSCH. When the beam report is transmitted through a PUCCH or PUSCH, the beam report information may be included in CSI (e.g., CSI payload). The PUCCH resource may be a PUCCH resource configured for at least a purpose of CSI transmission. The beam report information may be multiplexed with other CSI (e.g., CQI, PMI, RI, LI, etc.), and the multiplexed beam report information and other CSI may be transmitted through the PUCCH. When the beam report is transmitted through a PUSCH, the beam report information may be defined as a MAC CE, the beam report information may be encoded into a TB, and the encoded TB (e.g., encoded beam report information) may be mapped to a PUSCH resource. For example, a new MAC CE including beam report information triggered by the terminal may be defined, and the new MAC CE may be distinguished from conventional MAC CE.

According to the exemplary embodiment of FIG. 9, the terminal may determine a first uplink resource and may request another uplink resource (e.g., second uplink resource) for transmitting the beam report information through the determined first uplink resource. In the exemplary embodiment, the first uplink resource may be a PUCCH resource configured for transmitting an SR (hereinafter referred to as 'PUCCH SR resource'), and the second uplink resource may be an uplink resource (e.g., PUSCH or PUCCH) dynamically scheduled by a DCI in response to the SR. The second uplink resource may be located in the same carrier as the first uplink resource. Alternatively, the second uplink resource may be located in a different carrier from the first uplink resource. The first uplink resource and the second uplink resource may be associated with each other. A period of the second uplink resource may match a period of the first uplink resource. Alternatively, the period of the second uplink resource may differ from the period of the first uplink resource. The first uplink resource may be the earliest resource appearing after (T1+T2) from the CSI-RS resource among valid uplink resources configured for beam reporting. The valid uplink resources may include periodic PUCCH resources and/or semi-persistent PUCCH resources.

In the above-described exemplary embodiments, the uplink resource for transmitting beam report information or the uplink resource for requesting the resource for the transmission of beam report information may be associated with the QCL source signal (e.g., CSI-RS resource or SSB resource) of the current TCI. The uplink resource for transmitting beam report information or the uplink resource for requesting the resource for the transmission of beam report information may be configured as dedicated resources for beam reporting triggered by the terminal. The uplink resource may be determined based on the QCL source signal (e.g., CSI-RS resource). For example, a time resource (e.g., slot, symbol) of the uplink resource may be represented as a resource shifted by a predetermined time offset from a time resource (e.g., slot, symbol) of the CSI-RS resource. The time offset may be transmitted to the terminal as configuration information for the uplink resource. According to the exemplary embodiment, the time offset may correspond to a time not shorter than (T1+T2). A periodicity of the uplink resource may match a periodicity of the CSI-RS resource. In this case, a periodicity value of the uplink resource may not be separately signaled to the terminal. The periodicity value of the uplink resource may be determined by the terminal based on the periodicity of the CSI-RS resource. The periodicity of the uplink resource may be a divisor or a multiple of the periodicity of the CSI-RS resource.

In the above-described exemplary embodiment, the valid uplink resources may include PRACH resources and/or SRS resources. Since it is difficult to transmit a large amount of information in a PRACH resource or SRS resource, if the size of the beam report information is small (e.g., if the size of the beam report information is within a few bits), a PRACH resource or SRS resource may be used. Alternatively, the PRACH resource or SRS resource may be used exclusively for the purpose of the aforementioned first uplink resource. In other words, the PRACH resource or SRS resource may be used for the purpose of requesting another uplink resource.

Meanwhile, the uplink beam applied to the aforementioned uplink resource for beam reporting may degrade. For example, the uplink resource may be a resource to which an unified TCI (e.g., uplink unified TCI or joint unified TCI) is applied, and the beam of the current unified TCI (e.g., uplink unified TCI or joint unified TCI) may be determined to be instantaneously degraded or invalid. In this case, if the terminal reports a candidate beam based on the uplink resource and the degraded beam, the base station may not receive the candidate beam information reported by the terminal.

As a method for solving the above-described issue, a method of configuring uplink resources for beam reporting in a form where multiple resources are repeatedly arranged may be used. The multiple repeated resources may be distinguished in the time domain. In other words, the multiple repeated resources may be mapped onto different symbol sets, and the multiple repeated resources may be arranged in the same slot or in different slots. The multiple resources may be associated with multiple uplink beams, respectively. The terminal may select one or more resources among the multiple resources, and based on uplink beam(s) corresponding to the selected resource(s), the terminal may perform a beam reporting operation or an operation of requesting another uplink resource in the selected resource(s). At least an SR may be mapped to the selected resource(s). For example, the selected resource may be a PUCCH SR resource. Alternatively, at least CSI (e.g., CSI including beam report information) may be mapped to the selected resource(s). For example, the selected resource may be a PUCCH resource for CSI transmission.

In an exemplary embodiment, the uplink resource may be a PRACH resource, and the PRACH resource may include multiple repeated PRACH resources. According to another exemplary embodiment, the uplink resource may be an SRS resource, and the SRS resource may include multiple repeated SRS resources. The PRACH resource or the SRS resource may be configured for purposes other than beam reporting (e.g., contention-based random access, non-contention-based random access, uplink beam management, uplink CSI acquisition) in the terminal, and the terminal may reuse the PRACH resource or the SRS resource for beam reporting. Based on the above-described operation, since a separate uplink resource is not required for beam reporting, uplink resources may be saved. Specific sequences or specific preambles of PRACH or SRS may be allocated as dedicated resources for beam reporting, and information on the number and set of the specific sequences or the specific preambles may be configured to the terminal by the base station. In other words, transmission for beam reporting and transmission for other purposes may be distinguished through sequences or preambles.

The uplink beam to be applied to the multiple repeated PRACH resources may be arbitrarily determined by the terminal. Alternatively, the beam of the PRACH resources may be formed based on a reception beam of associated SSB resource(s). The reception beam of the SSB resource may have low relevance to a unified TCI (e.g., uplink unified TCI, joint unified TCI). The uplink beam (e.g., TCI, spatial relation information) for the SRS resources may be configured. The configured uplink beam may be a beam allocated for a purpose other than beam reporting. The configured uplink beam may have low relevance to a unified TCI (e.g., uplink unified TCI, joint unified TCI). In order to perform the proposed unified TCI-based beam reporting procedure, it may be necessary to define a mapping relationship between PRACH resources and uplink beams (e.g., TCIs) or between SRS resources and uplink beams (e.g., TCIs). Details regarding the mapping relationship will be described later.

As a method for further improving the efficiency of uplink resource utilization, PUCCH resources may be used as the uplink resources. The PUCCH resources may include L repeatedly transmitted PUCCH resources (or PUCCH repeated transmissions, PUCCH instances) in the time domain. A mapping relationship between the multiple repeated PUCCH resources and uplink beams (e.g., TCIs) may be defined. When the number of the uplink beams (e.g., TCIs) is N, the mapping relationship may generally be established between L PUCCH resources and the N uplink beams (e.g., TCIs). L and N may each be natural numbers.

As described above, an uplink beam may correspond to a unified TCI. The N uplink beams may be TCIs belonging to a unified TCI pool (e.g., unified TCI list). According to the above-described conditions, the N uplink beams may include only activated TCIs. For example, N TCIs may be selected from M activated uplink or joint unified TCIs, and the selected N TCIs may be mapped to the L PUCCH resources or a subset of the L PUCCH resources. M may be equal to or greater than N. More specific details will be described through exemplary embodiments below.

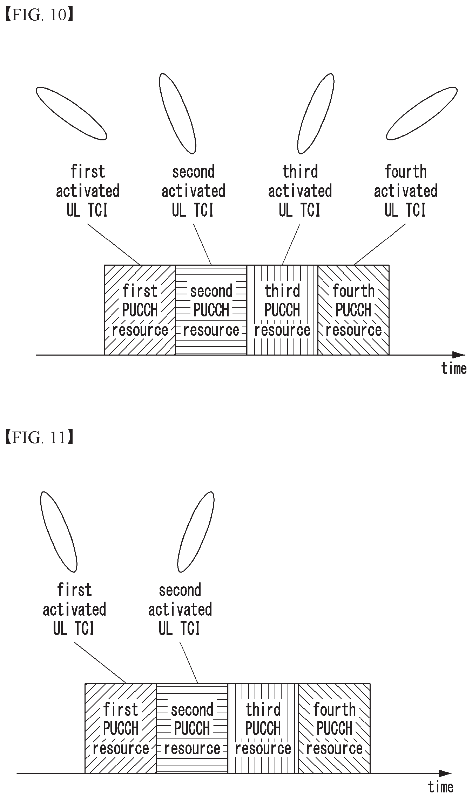

FIG. 10 is a conceptual diagram illustrating a first exemplary embodiment of a beam reporting method based on repeated PUCCH resources.

Referring to FIG. 10, the terminal may receive a configuration of PUCCH resources that are repeated four times in the time domain from the base station for the above-described beam reporting operation. The terminal may receive an indication (e.g., configuration) of four activated uplink TCIs from the base station. In other words, L may be 4, and N may be 4. The four activated uplink TCIs may be sequentially mapped to the four PUCCH resources. In other words, the first to fourth activated uplink TCIs may be respectively associated with the first to fourth PUCCH resources. For example, an activated TCI with a lower index (or a higher index) may be mapped to an earlier PUCCH resource (or a later PUCCH resource).

The terminal may select one resource (e.g., the second PUCCH resource) among the four PUCCH resources for beam reporting. The terminal may report CSI (e.g., CSI including beam report information) to the base station or transmit an SR requesting an uplink resource based on the second activated uplink TCI corresponding to the second PUCCH resource in the second PUCCH resource.

In the above-described exemplary embodiment, M and N may be 4. In other words, all activated uplink TCIs may be mapped one-to-one to the PUCCH resources. Alternatively, M may be greater than N, and N may be 4. In this case, the terminal may select N TCIs among the M activated uplink TCIs and map the selected N uplink TCIs to the PUCCH resources. The N uplink TCIs may be selected according to a predetermined rule. For example, the N uplink TCIs may be selected in an order of a lower TCI index (or a higher TCI index). As another example, the N uplink TCIs may be selected in an order in which the uplink TCIs are activated (or in the reverse order of activation). Alternatively, the N uplink TCIs may be appropriately determined by the base station, and information on the determined N uplink TCIs may be transmitted from the base station to the terminal. The terminal may identify the N uplink TCIs based on the information and map the identified N uplink TCIs to the PUCCH resources. If M is greater than N and there is no valid beam among the TCIs (e.g., uplink TCIs) mapped to the PUCCH resources, the terminal may not perform the beam reporting operation using the PUCCH resources.

In the above-described exemplary embodiment, the terminal may not expect the number of uplink resources (e.g., L) to be set to a value smaller than the number of activated uplink TCIs (e.g., M or N). The terminal may always expect a configuration where L≥M or L≥N. If L≥M or L≥N is not configured, the terminal may consider the configuration to be erroneous. If the configuration is considered erroneous, the terminal may not perform the beam reporting operation using the uplink resources.

FIG. 11 is a conceptual diagram illustrating a second exemplary embodiment of a beam reporting method based on repeated PUCCH resources.

Referring to FIG. 11, two activated uplink TCIs may be mapped to four repeated PUCCH resources. In other words, L may be 4, and N may be 2. All activated uplink TCIs may be mapped to the PUCCH resources. In other words, M and N may be 2. Alternatively, the two uplink TCIs may be uplink TCIs selected by the base station or according to a predetermined rule among M activated uplink TCIs. In other words, M may be greater than N, and N may be 2. In this case, the remaining (L-N) PUCCH resources (e.g., the third PUCCH resource and the fourth PUCCH resource) to which uplink TCIs are not mapped may not be used at least for the purpose of beam reporting. The terminal may transmit other uplink signals and channels in the third PUCCH resource and the fourth PUCCH resource. The other uplink signals and channels may be dynamically allocated by the base station. Alternatively, the other uplink signals and channels may be semi-statically configured resources that overlap with the third PUCCH resource or the fourth PUCCH resource.

As another method, the terminal may not expect the number of uplink resources (e.g., L) to be set to a value greater than the number of activated uplink TCIs (e.g., M or N). The terminal may always expect a configuration where L≤M or L≤N. If L≤M or L≤N is not configured, the terminal may consider the configuration to be erroneous. If the configuration is considered erroneous, the terminal may not perform the beam reporting operation using the uplink resources. Alternatively, based on a combination with the above-described method, the terminal may always expect a configuration where L=M or L=N. If L=M or L=N is not configured, the terminal may consider the configuration to be erroneous.

According to another exemplary embodiment, the number of uplink resources may be limited to 2. In other words, L may be 2.

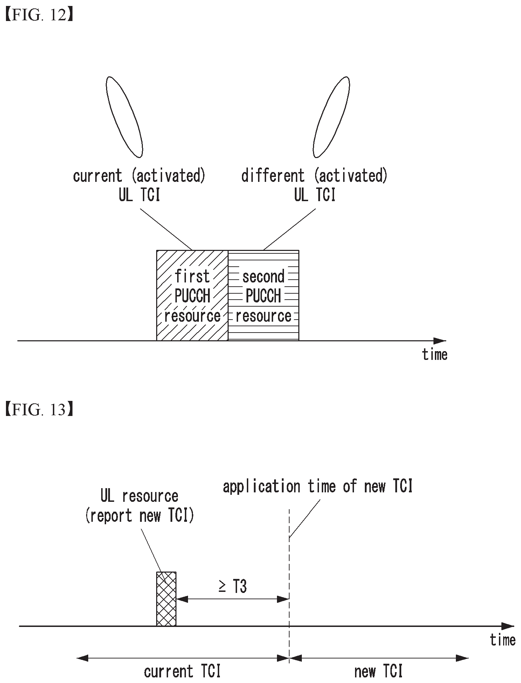

FIG. 12 is a conceptual diagram illustrating a third exemplary embodiment of a beam reporting method based on repeated PUCCH resources.

Referring to FIG. 12, two PUCCH resources may be configured in the terminal for a beam reporting operation initiated by the terminal. The first PUCCH resource and the second PUCCH resource may be repeated PUCCH resources. The first PUCCH resource and the second PUCCH resource may be independently configured resources, and configuration information such as resource format, location, and size may differ between the first PUCCH resource and the second PUCCH resource. A method of uplink beam mapping different from the method applied in the above-described exemplary embodiment may be applied to the exemplary embodiment of FIG. 12. For example, the first PUCCH resource may be associated with a currently used (activated) uplink TCI or joint TCI. The second PUCCH resource may be associated with a different activated TCI from the current TCI. The different TCI may correspond to a backup beam or a default beam. The different TCI may be one of activated uplink TCIs or activated joint TCIs selected according to a predefined rule. Alternatively, the different TCI may be dynamically or semi-statically configured to the terminal by the base station. If the current TCI and/or the different TCI of the terminal is updated through a TCI indication, the TCIs mapped to the PUCCH resource(s) may also be updated to corresponding beams.

The methods applied in the above-described exemplary embodiments may also be equally applied to the beam reporting operation based on PRACH resources and SRS resources. In other words, the PUCCH resources repeated L times in the above-described exemplary embodiments may correspond to PRACH resources repeated L times or SRS resources repeated L times, and the above-described TCI mapping method may be equally applied to the PRACH resources repeated L times and the SRS resources repeated L times.

Multiple uplink resource sets may be configured for beam reporting. For example, a first uplink resource set consisting of a single PUCCH resource (or a PRACH resource, an SRS resource, etc.) and/or a second uplink resource set consisting of repeated PUCCH resources (or PRACH resources, SRS resources, etc.) may be configured in the terminal. The terminal may select one of the first uplink resource set and the second uplink resource set based on a predetermined condition and perform the above-described beam reporting operation based on the selected resource set. For example, if the currently applied uplink TCI is valid, beam reporting may be performed based on the first uplink resource set. Conversely, if the current uplink TCI is not valid, beam reporting may be performed based on the second uplink resource set. The first uplink resource set and the second uplink resource set may overlap. According to an exemplary embodiment, the first uplink resource set may be a subset of the second uplink resource set. In other words, the PUCCH resources (or PRACH resources, SRS resources, etc.) constituting the second uplink resource set may include the PUCCH resource (or PRACH resource, SRS resource, etc.) of the first uplink resource set.

The uplink resources for transmitting beam report information and/or the uplink resources for requesting the resource for beam report information may be arranged in a serving cell different from a serving cell where the terminal measured downlink resources. In other words, the above-described beam measurement operation and the above-described beam reporting operation may be performed in different serving cells. A new candidate beam reported by the terminal may be applied not only to the serving cell (e.g., a first serving cell) where the terminal performed beam measurement but also to a different serving cell (e.g., a second serving cell) from the serving cell where the terminal performed beam measurement. A QCL relationship may be established between the first serving cell and the second serving cell. For example, at least one downlink signal or at least one uplink signal transmitted in the second serving cell may be configured to have a QCL relationship with an SSB of the first serving cell. The second serving cell may be the same as or different from the serving cell to which the uplink resource is allocated.

During the beam reporting operation or the preparation operation for beam reporting, the unified TCI of the terminal may be updated. In other words, the terminal may receive information (e.g., TCI indication information) indicating application of a new TCI (e.g., second TCI) different from the currently applied TCI (e.g., first TCI). Specifically, the terminal may receive a DCI including the TCI indication information and complete a decoding operation for the DCI between a first time and a second time. A time (e.g., slot, symbol) at which the TCI indicated by the DCI is applied may be located between the first time and the second time. For example, the first time may be a time (e.g., slot, symbol) at which the terminal determines a beam quality of the current TCI has deteriorated. Alternatively, the first time may correspond to a resource (e.g., slot, symbol) in which the terminal received a QCL source signal (e.g., CSI-RS resource, SSB resource) of the current TCI. The second time may correspond to an uplink resource (e.g., slot, symbol) used for beam reporting. Alternatively, the second time may refer to a time or a resource (e.g., slot, symbol) after (T1+T2) from the above-described reference resource (e.g., CSI-RS resource, SSB resource).

In the above-described exemplary embodiment, the terminal may terminate the beam reporting operation triggered by the current TCI (e.g., first TCI). In other words, the terminal may omit the uplink transmission operation being prepared for beam reporting. If a beam quality of the newly indicated TCI (e.g., second TCI) is determined to have deteriorated or to be invalid, the terminal may trigger a new beam reporting operation based on the TCI (e.g., second TCI). A time at which the terminal determines the beam quality of the TCI may be independent of the resource where the DCI indicating the TCI is received. For example, the time (e.g., slot, symbol) at which the terminal receives the QCL source signal corresponding to the indicated new TCI and performs a beam measurement operation may be earlier than, the same as, or later than the resource (e.g., slot, symbol) where the DCI is received. The beam reporting operation triggered by the terminal may be performed only once at a given time. In other words, the beam reporting operation of the terminal may be performed based on a maximum of one triggering event. As another method, in the above-described exemplary embodiment, the terminal may continue the beam reporting operation triggered by the current TCI (e.g., first TCI) and perform the prepared uplink transmission as it is. In this case, if the beam quality of the newly indicated TCI (e.g., second TCI) is determined to have deteriorated or to be invalid, the terminal may not initiate a new beam reporting operation based on the second TCI until the beam reporting operation is completed (e.g., until an uplink signal including beam report information is transmitted). Alternatively, the beam reporting operation based on the first TCI and the beam reporting operation based on the second TCI may be performed in parallel at the same time. In this case, the terminal may expect that the uplink resource corresponding to the first TCI and the uplink resource corresponding to the second TCI do not overlap. For example, the uplink resource corresponding to the second TCI may be allocated to a later resource than the uplink resource corresponding to the first TCI.

In the above-described exemplary embodiments, one or more new candidate beams may be reported. The terminal may select multiple candidate beams from a candidate beam set and transmit information on the selected multiple candidate beams in a single uplink resource. The multiple candidate beams may be included in a single beam report or a single CSI report. In this case, the terminal may sequentially map the multiple candidate beams to a CSI payload in order of high (or low) beam quality. The base station may determine priorities of the multiple candidate beams based on the above-described rule. Alternatively, beam quality measurement value(s) (e.g., L1-RSRP, L1-SINR, hypothetical SINR, etc.) corresponding to the new candidate beam(s) may be explicitly included in the beam report or CSI report together with the new candidate beam(s).

The beam report information or CSI report information may include information on a cell ID (e.g., physical layer cell identifier (PCI)). For example, the cell ID of the serving cell where an event has occurred may be included in the beam report information together with information on the event. As another example, the cell ID of the serving cell where the beam quality of the candidate beam was measured (e.g., the cell ID of the serving cell where the QCL source signal of the TCI was received) may be included in the beam report information together with information on the candidate beam. Alternatively, the cell ID may refer to an ID of a target serving cell where a new beam is to be applied. The target serving cell may be arbitrarily determined by the terminal. Alternatively, in the above-described exemplary embodiments, one or more cell IDs among the cell IDs may be included in the beam report information. Information on a cell ID may include a cell ID value. Alternatively, information on a cell ID may include a separate index for referring to cell ID(s) configured in the terminal. For example, the separate index may be indexed from 0 to (the number of cell IDs configured in the terminal - 1). Through the above-described method, the proposed beam reporting method may not be limited to operations within a serving cell but may be extended to beam measurement, discovery, and reporting operations across serving cells. For example, the terminal may update a beam of a second serving cell using an optimal beam found in a first serving cell.

According to the above-described beam reporting method triggered by the terminal, signaling overhead for beam reporting may be reduced, and a delay time required for beam switching may be shortened. Therefore, compared to a conventional beam reporting method triggered by the base station, resource efficiency and link reliability may be improved. Since the terminal determines a transmission direction of the candidate beam and reports related information (explicitly or implicitly), the base station may not need to perform a separate procedure to determine the transmission direction of the beam. The above-described operation may be advantageous for a high-speed beam switching operation, which will be described later. According to the above-described exemplary embodiment, the beam quality value of the candidate beam may be excluded from the beam report information (or CSI report information), thereby reducing UCI overhead and increasing the range of uplink resources available for UCI transmission.

Some configurations of the above-described methods may be equally applied to a beam failure recovery procedure of the terminal. For example, in an event of a beam failure, the terminal may search for a beam to replace the failed beam from the above-described beam set (e.g., beam set configured based on a TCI pool) and transmit one or more beams satisfying a beam quality threshold q1 (e.g., information on the one or more beams) to the base station through a PRACH or PUSCH. The same beam set may be commonly used for the beam reporting procedure and the beam recovery procedure of the terminal. Alternatively, an inclusion relationship may be established between the beam set used for the beam reporting procedure and the beam set used for the beam recovery procedure.

### [Beam switching method]

A beam of the terminal may be dynamically controlled by the base station. The base station may determine a suitable downlink beam and/or uplink beam for the terminal based on beam report information received from the terminal and may indicate the determined beam to the terminal. The beam indication operation may be performed based on an unified TCI framework. Alternatively, the beam indication operation may be performed through an individual signaling procedure for each physical signal and channel. The beam indication information may be transmitted to the terminal through a UE-specific DCI that includes scheduling information of a data channel. A transmission resource (e.g., PDCCH search space set) of the DCI may be configured independently of an uplink resource for beam reporting. In an NR communication system, the DCI may include a DCI format 1_0, DCI format 1_1, DCI format 1_2, DCI format 1_3, DCI format 0_0, DCI format 0_1, DCI format 0_2, DCI format 0_3, and the like. A scheduling DCI may have a relatively large payload size, and the scheduling DCI may be mapped to a wide resource region (e.g., multiple CCEs) for high-reliability transmission. When the beam of the terminal is updated through the above-described method, signaling overhead may be high, and depending on a monitoring periodicity of the DCI format, a delay time until beam update may increase.

In conjunction with beam reporting of the terminal, a method in which the terminal autonomously switches the beam to a candidate beam reported to the base station may be considered. Alternatively, a method in which the base station minimally intervenes may be considered, where the base station transmits a confirmation message or simplified beam indication information to the terminal based on the beam reporting of the terminal, and the terminal switches the beam based on reception of the confirmation message or the received simplified beam indication information. If the candidate beam is a downlink beam, the terminal may switch its downlink beam to the candidate beam. If the candidate beam is an uplink beam, the terminal may switch its uplink beam to the candidate beam. If the candidate beam is a beam for both uplink and downlink, the terminal may switch both its uplink beam and its downlink beam to the candidate beam. The above-described method may be referred to as (Method 400).

FIG. 13 is a conceptual diagram illustrating a first exemplary embodiment of a beam switching method without intervention by a base station.

Referring to FIG. 13, the terminal may report a new beam to the base station based on the uplink resource determined through the above-described method. The new beam may be an unified TCI, and the new beam may be a beam different from the current TCI. The current TCI may be interpreted as a previous TCI from the perspective of beam switching. The terminal may determine a time at which the reported beam is to be applied based on the uplink resource where the beam was reported. The beam may be applied starting from a specific slot or symbol determined in consideration of a time (e.g., T3) required for the base station to decode the uplink resource. For example, the specific slot may be determined as a slot that is K1 slots later than a slot to which the uplink resource is mapped. The specific symbol may be determined as a symbol that is K2 symbols later than the last symbol of the uplink resource. As another method, the specific slot may be determined as the first slot that appears after K3 symbols from the uplink resource (e.g., the last symbol of the uplink resource). K1, K2, and K3 may each be natural numbers.

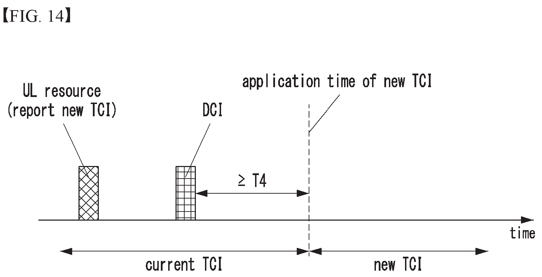

FIG. 14 is a conceptual diagram illustrating a first exemplary embodiment of a beam switching method with intervention by a base station.

Referring to FIG. 14, the terminal may report a new beam to the base station based on the uplink resource determined through the above-described method. The new beam may be an unified TCI and may be a beam different from the current TCI. The base station may receive the beam report and, in response to receiving the beam report, may transmit a confirmation message or beam indication information to the terminal. The confirmation message or beam indication information may be transmitted through a DCI. The terminal may receive the DCI (e.g., DCI including the confirmation message or beam indication information) and determine a time at which the reported beam is to be applied based on the resource where the DCI was received. The beam may be applied starting from a specific slot or symbol determined in consideration of a time (e.g., T4) required for the terminal to decode the DCI. For example, the specific slot may be determined as a slot that is K4 slots later than a slot to which the DCI is mapped. The specific symbol may be determined as a symbol that is K5 symbols later than the last symbol to which the DCI is mapped. As another method, the specific slot may be determined as the first slot that appears after K6 symbols from the resource to which the DCI is mapped (e.g., the last symbol to which the DCI is mapped). K4, K5, and K6 may each be natural numbers.

According to the above-described method, the terminal may report multiple candidate beams to the base station. For example, the terminal may report multiple candidate beams to the base station for one transmission direction (e.g., downlink or uplink). In this case, the terminal may determine one of the reported multiple candidate beams as a new TCI and switch a beam for the corresponding transmission direction to the determined TCI. For example, the terminal may determine a beam with the highest beam quality among the multiple candidate beams as the new TCI.

The beam report information may include both a downlink candidate beam and an uplink candidate beam. In this case, a time for switching a downlink beam to the downlink candidate beam and a time for switching an uplink beam to the uplink candidate beam may be the same. The base station may generate a common confirmation message for the downlink candidate beam and the uplink candidate beam and may transmit the common confirmation message to the terminal through the same DCI. The terminal may receive the DCI from the base station and confirm the common confirmation message regarding the downlink candidate beam and the uplink candidate beam included in the DCI.

According to an exemplary embodiment, the terminal may report a first TCI belonging to a downlink TCI pool as a new candidate beam for a downlink TCI to the base station. Based on the above-described method, the terminal may switch the downlink TCI to the first TCI. The first TCI may be included not only in the downlink TCI pool but also in the uplink TCI pool (e.g., set of activated uplink TCIs). In this case, even though the terminal did not perform a beam reporting operation for the uplink TCI, the terminal may switch the uplink TCI to the first TCI based on the downlink beam report. The time for switching the uplink TCI may be the same as the timing for switching the downlink TCI.

The above-described exemplary embodiment may be equally applied even when the transmission direction is opposite. For example, the terminal may report a second TCI belonging to an uplink TCI pool as a new candidate beam for an uplink TCI to the base station. Based on the above-described method, the terminal may switch the uplink TCI to the second TCI. The second TCI may be included not only in the uplink TCI pool but also in the downlink TCI pool (e.g., set of activated downlink TCIs). In this case, even though the terminal did not perform a beam reporting operation for the downlink TCI, the terminal may switch the downlink TCI to the second TCI based on the uplink beam report.

According to (Method 200), the transmission direction of the reported candidate beam may not be distinguished. Even though the transmission direction of the reported candidate beam is not distinguished, the base station may identify the transmission direction of the candidate beam based on an inclusion relationship between the candidate beam and the TCI pool. The terminal may update the downlink beam and/or the uplink beam based on the inclusion relationship between the reported candidate beam and the TCI pool. If the reported candidate beam belongs to the downlink TCI (e.g., set of activated downlink TCIs), the terminal may replace the downlink TCI with the candidate beam based on the above-described method. If the reported candidate beam belongs to the uplink TCI (e.g., set of activated uplink TCIs), the terminal may replace the uplink TCI with the candidate beam based on the above-described method. If the reported candidate beam belongs to both the downlink TCI (e.g., set of activated downlink TCIs) and the uplink TCI (e.g., set of activated uplink TCIs), the terminal may replace both the downlink TCI and the uplink TCI with the candidate beam.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:
receiving configuration information of a periodic downlink resource from a base station;
performing a beam measurement operation for a first signal received in the periodic downlink resource;
determining that an event occurs based on a result of the beam measurement operation;
in response to the event occurring, generating beam report information; and
performing a reporting operation for the beam report information based on the event,
wherein the beam measurement operation includes deriving a beam quality value of the first signal N times, and the beam report information includes at least an index of the periodic downlink resource.

2. The method according to claim 1, wherein the determining that the event occurs comprises:
comparing the beam quality values derived N times with a reference value; and
determining that the event occurs based on a result of the comparison between the beam quality values derived N times and the reference value.

3. The method according to claim 1, wherein the periodic downlink resource corresponds to a first transmission configuration indication (TCI) belonging to a TCI list configured in the terminal, and the first TCI is an activated TCI.

4. The method according to claim 1, wherein the beam quality value is a reference signal received power (RSRP), and the reference value is a beam quality value of a periodic downlink resource corresponding to a current beam of the terminal.

5. The method according to claim 1, wherein the reference value does not change in an interval during which the beam measurement operation is performed.

6. The method according to claim 1, wherein the first signal is received within a preconfigured time interval, and the preconfigured time interval includes one or more periods for the periodic downlink resource.

7. The method according to claim 1, wherein the reporting operation is an operation to notify the base station that the terminal transmits a scheduling request (SR) in a first uplink resource and transmits a physical uplink shared channel (PUSCH) in a second uplink resource.

8. The method according to claim 7, wherein the PUSCH includes the beam report information.

9. The method according to claim 7, wherein the second uplink resource is associated with the first uplink resource, and a period of the second uplink resource matches a period of the first uplink resource.

10. A method of a base station, comprising:
transmitting configuration information of a periodic downlink resources to a terminal;
transmitting a first signal for a beam measurement operation of the terminal to the terminal in the periodic downlink resources; and
in response to an event occurring based on a result of the beam measurement operation, receiving a report on beam report information from the terminal,
wherein the beam measurement operation includes deriving a beam quality value of the first signal N times, and the beam report information includes at least an index of the periodic downlink resource.

11. The method according to claim 10, wherein the periodic downlink resource corresponds to a first transmission configuration indication (TCI) belonging to a TCI list configured in the terminal, and the first TCI is an activated TCI.

12. The method according to claim 10, wherein the first signal is transmitted within a preconfigured time interval, and the preconfigured time interval includes one or more periods for the periodic downlink resource.

13. The method according to claim 10, wherein the report includes information indicating to the base station that the terminal transmits a scheduling request (SR) in a first uplink resource and transmits a physical uplink shared channel (PUSCH) in a second uplink resource.

14. The method according to claim 13, wherein the PUSCH includes the beam report information.

15. The method according to claim 13, wherein the second uplink resource is associated with the first uplink resource, and a period of the second uplink resource matches a period of the first uplink resource.

16. A terminal comprising at least one processor, wherein the at least one processor causes the terminal to perform:
receiving configuration information of a periodic downlink resource from a base station;
performing a beam measurement operation for a first signal received in the periodic downlink resource;
determining that an event occurs based on a result of the beam measurement operation;
in response to the event occurring, generating beam report information; and
performing a reporting operation for the beam report information based on the event,
wherein the beam measurement operation includes deriving a beam quality value of the first signal N times, and the beam report information includes at least an index of the periodic downlink resource.

17. The terminal according to claim 16, wherein in the determining that the event occurs, the at least one processor causes the terminal to perform:
comparing the beam quality values derived N times with a reference value; and
determining that the event occurs based on a result of the comparison between the beam quality values derived N times and the reference value.

18. The terminal according to claim 16, wherein the periodic downlink resource corresponds to a first transmission configuration indication (TCI) belonging to a TCI list configured in the terminal, and the first TCI is an activated TCI.

19. The terminal according to claim 16, wherein the reporting operation is an operation to notify the base station that the terminal transmits a scheduling request (SR) in a first uplink resource and transmits a physical uplink shared channel (PUSCH) in a second uplink resource.

20. The terminal according to claim 16, wherein the PUSCH includes the beam report information, the second uplink resource is associated with the first uplink resource, and a period of the second uplink resource matches a period of the first uplink resource.
